(19) Europäisches Patentamt
European Patent Office
Office européen des brevets

(11) Publication number : **0 492 858 A2**

# (12) EUROPEAN PATENT APPLICATION

(21) Application number : **91311314.8**

(51) Int. Cl.$^5$ : **H01M 6/18**

(22) Date of filing : **04.12.91**

(30) Priority : **21.12.90 GB 9027804**

(43) Date of publication of application : **01.07.92 Bulletin 92/27**

(84) Designated Contracting States : **AT BE CH DE ES FR GB IT LI NL SE**

(71) Applicant : **IMPERIAL CHEMICAL INDUSTRIES PLC**
**Imperial Chemical House, Millbank**
**London SW1P 3JF (GB)**

(72) Inventor : **Barley, Mark Howard**
**33 St Jame's Avenue, Upton**
**Chester, Cheshire (GB)**

(74) Representative : **Draggett, Peter Thornton et al**
**Imperial Chemical Industries PLC, Legal Department: Patents, PO Box 6, Bessemer Road**
**Welwyn Garden City Herts AL7 1HD (GB)**

## (54) Solid electrolytes.

(57) An electrical device, such as an electrochemical cell which comprises a conductive anode and cathode capable of mutual electrochemical reaction and separated by a solid electrolyte comprising :

a) a matrix of cross-linked polymer main chains, optionally having side-chains linked to the main chains, which side chains comprise polar groups free from active hydrogen atoms,

b) a polar aprotic liquid dispersed in the matrix, and

c) an ionised ammonium or alkali metal salt dissolved in the matrix and/or liquid,

characterised in that the liquid is present as at least 300 parts by weight per 100 parts by weight of the matrix,

a cathode therefor, the electrolyte per se, and processes for the preparation of the electrolyte and the cathode.

*Fig.1*

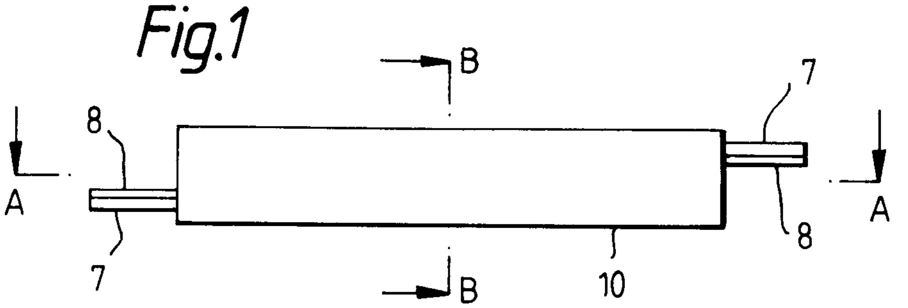

EP 0 492 858 A2

This invention relates to electrical devices, such as batteries (electrochemical cells), capacitors and electrochromic devices ('ECD's'), which comprise a solid electrolyte, a cathode for such cells, the electrolyte itself and processes for the preparation of the electrolyte and the cathode.

Generally, in conventional devices of this type; such an electrolyte is necessarily a rigid and dense conductive glass or bulky plastics electrolyte for satisfactory robustness and operation.

Examples of suitable materials for the electrolyte itself which are generally used in electrochromic devices are sodium beta-alumina or solid electrolytes of the type known as Bordeaux Glass.

Alternatively, polymeric semi-fluid electrolytes containing an alkali metal anion are used, often of the type known as Grenoble polymeric electrolytes, as described eg in Br. Poly. J 1975, 7, 319-327. Such semi-fluid plastics electrolytes require rigid containment and support for satisfactory robustness and operation.

All such electrolytes suffer from a number of (other) disadvantages. Thus, eg in several applications where solid-electrolyte electrochromic devices are potentially useful, such as compact batteries or automotive window ECD's, there is is a need for a multilaminar electrical device which is conformable to any desired shape, whilst being structurally robust, eg it may be readily conformed to an associated structure.

In known electrical devices, the electrolyte is either

a) inconveniently rigid or fluid, and/or

b) has insufficient elasticity, tensile strength, tear resistance and/or tack to provide a satisfactory conformable yet robust device.

We have now found that a particular solid electrolyte may readily be formed in situ and cross-linked in an electrical device or precast and cross-linked into a discrete easy to handle thin film having good tensile properties. The material also has excellent suitability for use in existing laminiform technology, eg for safety-glass ECD's, whether it is cast or precast and cross-linked or not.

The precast and cross-linked solid electrolyte has the additional advantage in further laminiform of controlling or minimising any unwanted solvents content.

Further, the particular solid electrolyte has good adhesion to any other component of the device with which it is in contact, thus promoting not only good device stability, but also good electrical contact within the device.

Additionally, the tack may be readily varied and controlled by adjusting readily variable parameters of the electrolyte.

The use of a solid electrolyte with the combination of these physical properties inter alia enables the production of electrical devices in an embodiment in which the electrodes, any electrochromic material and in particular the solid electrolyte are thin films.

The resultant electrical device itself may thus be light, of low density and highly compact.

The electrolyte in such a device is conformable to any desired shape, whilst being structurally robust.

In particular, we have found that a specific type of solid electrolyte, which contains

a) a polymer matrix and

b) at least 300 parts by weight per 100 parts by weight of the matrix of a liquid,

is nevertheless advantageous in handling, is unexpectedly dimensionally stable and flexible, and has unexpectedly good elastically resilient compression properties and good conductivity.

The electrolyte is thus suitable for and enables the production of electrical devices with advantageous properties, such as

a) high energy density batteries having an unexpectedly high power density (ie power per unit weight),

b) capacitors having an unexpectedly high capacitance density, similarly defined at room temperature, and

c) electrochromic devices with a fast response time.

This type of solid electrolyte is further described hereinafter and is known herein as 'the Solid Electrolyte'.

Accordingly the present invention provides an electrical device, such as an electrochemical cell, an electrolytic capacitor or electrochromic device, which comprises a conductive anode and cathode separated by the Solid Electrolyte, and, in the case of the cell, capable of mutual electrochemical reaction.

In a preferred embodiment the anode, cathode and Solid Electrolyte are thin films, so that the electrical device, such as a battery, capacitor or electrochromic device itself is highly compact and is flexible so that it is conformable to any desired shape.

The present invention also provides the Solid Electrolyte itself.

The Solid Electrolyte comprises:

a) a matrix of cross-linked polymer main chains, optionally having side-chains linked to the main chains, which side chains comprise polar groups free from active hydrogen atoms,

b) a polar aprotic liquid dispersed in the matrix, and

c) an ionised ammonium, alkali metal or alkaline earth metal salt dissolved in the matrix and/or liquid,

and is characterised in that the liquid is present as at least 300 parts by weight per 100 parts by weight of the matrix.

In the matrix of the Solid Electrolyte of the present invention, the cross-linked polymer main chains (to which the side chains are linked) may be for example essentially organic such as organic polymer chains optionally comprising sulphur, nitrogen, phosphorus or oxygen atoms.

Essentially organic cross-linked polymer main chains favourably comprise hydrocarbons or polyether units with cross-linking functions eg oxy or cross-linked -C=C- groups. Preferably such crosslinked main chains contain no, or at most a few, free cross-linking eg -C=C- functions.

The cross-linking eg -C=C- functions are favourably pendent, and may be in the side chains, e.g. in a terminal position. However, also within the scope of the present invention are polymer chains without specific cross-linking functions which are cross-linked by C-C bonds between chain atoms in the main chain (and/or in side chains as defined).

The Solid Electrolyte chains are cross-linked

a) for good mechanical properties, eg tear resistance and

b) to ensure that, at a chosen loading of polar liquid which is at least 300 parts by weight per 100 parts by weight of the matrix, the Solid Electrolyte remains solid at ambient temperatures.

However, excessive cross-linking tends to affect other desirable physical properties of the Solid Electrolyte adversely, for example extensibility, the achievement of feasible liquid loading levels of at least 300 parts by weight per 100 parts by weight of the matrix, and the conductivity of the Solid Electrolyte. The optimum degree of cross-linking will be dictated by a balance of such properties and will vary widely with the specific matrix material (inter alia). Within the composition ranges of the Solid Electrolyte given hereinafter such optimisation is largely a matter of routine trial.

However, by way of example it is often suitable if 2 to 8% of the monomer units of the main chain backbones are cross-linked, often via functions pendent from such units. In the embodiments of the Solid Electrolyte further described hereinafter, main chains typically average 2,500 to 10,000 backbone units per chain with 50 to 800 cross-links per chain. Corresponding Solid Electrolytes form a preferred aspect of the present invention.

Each chain is favourably linked to an average of at least 2, and preferably at least 4, (for example within such preferred chains 10 to 10,000) side-chains (as hereinbefore defined).

The polar groups in such side-chains may for example be ester or ether linkages.

The matrix (favourably) may consist essentially of cross-linked main chains comprising hydrocarbon or polyether units.

In such case, the side-chains are favourably end-capped polyether or polyether ester, such as polyalkylene oxide, or polyalkylene oxide carbonate side-chains linked to the main chains by oxy, or for hydrocarbon and polyether chaims, oxycarbonyl or carbonate groups. By 'end-capped' herein is meant that terminal OH groups in such chains are replaced by groups without active hydrogen atoms, eg ether or ester groups.

In such favoured main and side-chains, the equivalent ratio of side-chain polar groups (excluding any linking groups) to total carbon atoms in the matrix may suitably be in the range 2:3 to 1:6, preferably 2:3 to 1:4, such as 1:2 to 1:3.

Favoured matrix polymers with main chains comprising polyether units include polymers with essentially polyether main chains and side-chains of the above favoured polyether types.

These may be made for example by copolymerising monomers comprising ethylene and/or propylene oxide with for example a compound selected from butadiene monoxide, glycidyl methacrylate, glycidyl acrylate and vinyl glycidyl ether and in addition with glycidol.

The free -OH groups resulting from the glycidol and the terminal -OH groups of the polyether chains may be reacted with alkylene oxides, preferably ethylene oxide and optionally derivatives thereof, using for example a basic or acidic catalyst to form side-chains comprising polar groups as aforesaid.

The free OH groups may be reacted to eliminate the active hydrogen atoms ('capped'), (for example by forming alkoxy groups) by reacting them with an alkyl halide for example methyl chloride in the presence of a basic catalyst or by forming ester groups with a carboxylic acid or anhydride).

Any of the foregoing cross-linkable polymers may contain -C=C- groups (in the main or side chains).

In such case, they may be cross-linked using for example free radical or Γ-radiation, generally after side chain formation and capping (if effected).

Cross-linking, often during or after device fabrication, but preferably after fabrication, may suitably be carried out under conventional, eg thermally induced free radical, conditions, or by conventional UV or Γ-irradiation.

Crosslinking tends to inhibit lamination if the device is produced by this method.

Accordingly any polymer in the present solid electrolyte should preferably be in an uncrosslinked form before and whilst lamination takes place.

Thermally-initiated crosslinking (using initiators such as benzoyl peroxide) can be adequate, but unless care is taken may pose a problem in that curing unfortunately may take place during lamination. UV irradiative crosslinking will also tend to be impractical if irradiation is attempted through a UV-absorptive medium which

is to form part of the device, eg electrochromic glass. This will tend to be the case if a device of the invention is produced eg by injection of an uncrosslinked precursor of the Solid Electrolyte between glass sheets in such a device, followed by crosslinking in situ.

One example of an alternative method which avoids the above problems is crosslinking initiated via irradiation. This forms an aspect of the present invention, in particular crosslinking initiated via light (visible emr) irradiation.

A small proportion of a visible initiator, such as camphorquinone may be added to the polymer and used to crosslink it following lamination or injection.

During curing camphorquinone is photoreduced to a colourless species which is thermally, photochemically and electrochemically stable.

Curing is very rapid and irradiation may be carried out through electrochromic glass.

Any free terminal -OH groups of the polyether side chains may if desired be capped with alkyl groups, preferably methyl, as noted below.

Where the device does not contain a reactive metal, eg lithium, polymers with some side-chains ending in OH or COOH groups may advantageously have good adhesion to eg an adjacent metal oxide electrochromic material of the device.

These polymers may be produced eg by copolymerisation of/end-capping with a small amount of methacrylic acid or hydroxyethyl methacrylate in the present polymers during formation and/or optional cross-linking.

In general, where the device comprises a reactive metal, eg lithium, as described further hereinafter, the side chains are favourably end-capped polyether chains (concomitantly cross-linked, as described further below).

By 'end-capped' herein is meant that terminal OH groups in such chains are replaced by groups without active hydrogen atoms, eg ether or ester groups.

Thus, in the specific polyether main chain polymers, free OH groups may be reacted to eliminate the active hydrogen atoms ('capped') (for example by forming alkoxy groups), by reacting them with an alkyl halide eg methyl chloride in the presence of a basic catalyst.

They may also be capped by forming ester groups with a carboxylic acid or anhydride.

Where main or side chains of the foregoing type contain -OH groups, eg from alkylene oxide (co)monomer, free OH groups may be reacted not only to eliminate the active hydrogen atoms (ie capped), but also to crosslink the main chains within the main polymer chains or via the side chains (depending on the location of the -OH groups) for example by reacting them with a polyfunctional isocyanate to form urethane linkages.

Where main chains of the foregoing type contain -C=C- groups, eg from butadiene monoxide comonomer, the chains may be cross-linked within the main polymer chains using for example free radical initiators or $\Gamma$-radiation, generally after side chain formation and capping (if effected).

The spatial distribution of any cross-linking as between the surface and the bulk of the Solid Electrolyte polymer matrix in optimising the the surface tack of the Solid Electrolyte is significant.

We have found that it is preferred that the bulk of Solid Electrolyte is cross-linked, inter alia for the beneficial effect on the tensile strength and tear resistance of the Solid Electrolyte, and in large laminar devices of this type held upright, such as electrochromic windows, to avoid the problems of hydrostatic pressure arising in a fluid electrolyte.

It is however preferred that the surface is essentially uncrosslinked for good tack.

This may be achieved eg

a) by ensuring the presence essentially at the surface only of a small amount of oxygen during cross-linking (except in the case of polymer main chains comprising polysiloxane chains, cross-linked by groups R as hereinafter defined), eg in the case inter alia of polyethers, polyacrylics, and polyvinylics; or

b) by the Solid Electrolyte being a composite material comprising a cross-linked bulk matrix with an uncrosslinked matrix material at one or both surfaces, which may contain a polar aprotic liquid dispersed in it and/or an ionised salt dissolved in it the liquid.

In case b), each of the matrix polymer and any salt or liquid present in it may be the same as that in the bulk of the Solid Electrolyte or different; any salt and/or liquid is often the same.

The surface layer of uncrosslinked material suitably is 5 to 200 micron thick, eg 10 to 50 micron and/or forms 5 to 20 wt% of the total matrix material.

Cross-linking may also be achieved even if no unsaturated groups are present, for example, with free radical forming substances for example peroxides, such as benzoyl peroxide, optionally with heating.

However, this procedure may cause adhesion of the matrix to a vessel in which it is made, and the degree of cross- linking may be so low that (although corresponding Solid Electrolytes tend to have good ambient temperature conductivities) the mechanical properties (eg tear resistance) of such matrices are impaired, and it is thus generally preferred that cross-linking should take place by reaction of cross-linking functions eg -C=C-

groups.

Favoured matrix polymers with main chains comprising hydrocarbon units include polymers with essentially hydrocarbon main chains, which may be preformed by polymerisation of moieties containing -C=C- groups.

Such polymers are then subsequently or synchronously cross-linked, optionally via cross-linkable functions (eg further -C=C- functions).

These are favourably pendent from the main chain, including in a side chain as hereinbefore defined eg in a terminal position.

Thus, for example the main chains may be formed by

a) polymerisation of a first monomer species comprising a single -C=C- function and a side chain moiety as defined hereinbefore,

b) copolymerisation of the first monomer species together with a second monomer species comprising two -C=C- functions to provide at least one cross-linkable -C=C- function, or

c) homopolymerisation of the second monomer species, to provide a multiplicity of cross-linkable -C=C- functions.

Each such function is often pendent and often in a side-chain as defined.

The side-chain moiety may be a favoured end capped polyether or polyether ester chain.

Thus for example

a) the first monomer species may be a methoxy polyethylene oxide methacrylate, acrylate or vinyl ether, and

b) the second monomer species may be allyl methacrylate, acrylate or vinyl ether as a comonomer, or

c) a polyethylene oxide dimethacrylate, diacrylate or bis(vinyl ether), or a polyethylene oxide carbonate dimethacrylate, diacrylate or bis(vinyl ether), which is subsequently homopolymerised.

This polymerisation may be effected by using a catalyst which is a zinc hydrocarbyl-polyol, in particular a zinc alkyl-polyol system, described in further detail in the Examples hereinafter.

This gives rise to an essentially pure polymer for use in the Solid Electrolyte, which for the reasons given hereinbefore must ultimately be crosslinked if it is to be employed in an electrical device.

In addition to providing an essentially pure polymer for use in the Solid Electrolyte, this class of catalyst gives good yields of colourless material with a high molecular weight, which is of particular use in electrochromic devices.

End-capping of side-chains (to eliminate active hydrogen atoms) and cross-linking of the main chains may be effected as described above. Cross-linking may be carried out whether cross-linking -C=C- groups are present or absent.

The relevant polymerisation of monomer -C=C-groups may be effected using free radical or group transfer initiation or $\Gamma$-radiation.

Such conditions may intrinsically, or may be adjusted to, also effect synchronous or immediately subsequent cross-linking, so that cross-linked matrix formation from monomer may be run as a one-pot process.

This is in particular the case where a difunctional (co)monomer is used.

From the foregoing it will be seen in summary that the matrix may be formed inter alia by

a) adding the side chains (as defined) to a matrix of corresponding essentially organic cross-linked main chains without side chains, or

b) cross-linking a matrix of essentially organic or inorganic-organic polymer chains with side chains (as defined) linked to the polymer chains.

In case b) the initial or product matrix favourably is one which does not readily crystallise at 0 to 100°C.

Matrix formation by any of the foregoing methods will generally be effected during production of the Solid Electrolyte as described further hereinafter.

Suitable polar aprotic liquids dispersed in the matrix as at least 300 parts by weight per 100 parts by weight of the matrix may be any compatible with the rest of the Solid Electrolyte.

The liquid may be a pure liquid or mixture (mutual solution) of liquids or a solution of a solid solute other than the salt component c) as defined hereinbefore of the Solid Electrolyte.

Suitable liquids include any such liquids with a dielectric constant of at least 20, preferably at least 50 and/or a dipole moment of at least 1.5, preferably at least 3 Debye.

Within the above, suitable liquids are those which comprise or have a component comprising an $NO_2$or CN group.

Preferred liquids are those which comprise or have a component comprising urably) an $-A_1-E-A_2-$ group where $A_1$ and $A_2$ each independently are a bond, -O-, or -NR- where R is $C_{1-4}$ alkyl and E is -CO-, -SO-, $-SO_2-$, or $-P(O)A_3-$ where $A_3$ independently is as defined for $A_1$ and $A_2$, or -O- when $A_1$ and $A_2$ are each a bond.

Such liquids or components thereof may also contain other substituents known to increase polarity.

Such substituents should however be without acidic hydrogen atoms, such as secondary amino, esterified carboxyl and such optionally substituted aminocarbonyl groups.

Within suitable and preferred polar aprotic liquids or components comprising an $-A_1-E-A_2-$ group are those of $R_1-A_1-E-A_2-R_2$ (including $R_1-A_1-P(O)(A_3-R_3)-A_2-R_2$) where $R_1$, $R_2$ and $R_3$ are each independently hydrogen or optionally substituted hydrocarbyl or $R_1$ and $R_2$ together are optionally substituted hydrocarbadiyl (to from a cyclic $R_1-A_1-E-A_2-R_2$ compound).

Examples of suitable such groups include $C_{1-10}$ alkyl optionally non-terminally oxa-substituted, including $C_{1-4}$ alkyl, and $C_{2-6}$ alka-$\alpha,\omega$ -diyl respectively.

Such liquids or components thereof thus include:
amides (-CONR-) such as dialkyl formamides for example dimethylformamide and N-methyl pyrrolidone,
sulphoxides (-SO-) such as dimethylsulphoxide and thiophene-1-oxide,
sulphones ($-SO_2-$) such as dimethylsulphone and sulpholane, and
carbonates (-O-CO-O) such as optionally oxa-substituted dialkyl and alkylene carbonates, for example diethyl, dipropyl, and bis(polyalkoxy alkyl) carbonates.

Preferred carbonates include bis(methoxy-ethoxyethyl) and bis(methoxypropoxypropyl) carbonates, and ethylene and propylene carbonates.

A group of such liquids includes:
alkylene carbonates, eg ethylene or propylene carbonate,
dialkylformamides and -sulphoxides, preferably where each alkyl group is $C_{1-4}$ alkyl, eg dimethylformamide cyclic ether, eg tetrahydrofuran, and
cyclic sulphones, eg sulpholane, and
higher molecular weight congeners of the foregoing, eg bis(polyalkoxyalkyl) carbonates, such as bis(methoxyethoxyethyl) carbonate.

The latter two categories tend to include higher viscosity liquids.

Favoured liquids include cyclic carbonates such as propylene carbonate.

The liquid may typically be present in the matrix as 300 to 1550 parts by weight, favourably 350 to 1500 parts by weight, per 100 parts by weight of the matrix.

Clearly the matrix should be in practical terms insoluble in the polar aprotic liquid, or, if soluble, the concentration of liquid in the matrix should be insufficient to dissolve the matrix to any appreciable extent.

Of course where any salt is insoluble in the matrix the liquid concentration should be sufficient to dissolve the salt adequately.

The polar aprotic liquid content is of significance in optimising the surface tack of the Solid Electrolyte.

Suitable materials, and concentrations, within these constraints will be evident or a matter of routine trial.

The ions in the ionised ammonium, alkali metal or alkaline earth metal salt dissolved in the matrix and/or liquid

a) may be (preferably) totally discrete and separated or

b) may exist as ion pairs or higher aggregates (eg triple ions).

The salt may suitably be a salt of $NH_4$, Na, K, Li or Mg, favourably Na, K, or Li, and preferably Li.

Suitable examples of the salt anion include mono-and divalent anions, inter alia $I^-$, $SCN^-$, $PF_{6}-$, $AsF_{6}-$, $BCl_{4}-$, $BPh_{4}-$, alkaryl sulphonate ions.

Preferred examples include $CF_3SO_{3}-$, $ClO_{4}-$ and $BF_{4}-$.

Preferred salts include lithium triflate $CF_3SO_3Li$ and lithium perchlorate. Mixtures of salts may be used.

The salt may typically be present in the matrix in a matrix:salt equivalent weight ratio of 1 equivalent part by weight of salt per 80 to 18,000 parts by weight of matrix.

The salt is favourably present in the matrix in such a ratio of 200 to 18,000, more favourably 200 to 7000 and preferably 400 to 7000 parts by weight.

Where the matrix contains oxygen atoms in the side and/or main chains, these ratios may be expressed in terms of equivalents of matrix oxygen atoms.

The salt may be present as 1 equivalent per 4 to 100 equivalents matrix oxygen atoms, favourably per 10 to 40 equivalents.

In a further aspect of the invention, the Solid Electrolyte may be made by a process comprising in any feasible order:

a) forming the matrix

b) incorporating the highly ionised salt in the matrix or a precursor thereof, and

c) introducing the aprotic liquid into the matrix or a precursor thereof.

The steps a), b) and c) may be carried out

i) in the order a), b) and c), or

ii) preferably, in the order b) and c), using a matrix precursor, and then a).

In case i), the salt is incorporated in a material (which may be a non-cross-linked polymer precursor of a cross-linked matrix, or an oligomer or monomer, or a mixture of such species) which is a precursor of a cross-linked polymer matrix.

Matrix formation thus involves cross-linking (e.g. as described hereinbefore and optionally polymerisation, either of which may be effected with or without a solvent or vehicle.

In brief, in such a case,

in step a) the salt or a solution thereof is dissolved in the matrix precursor or a solution thereof, the precursor is as necessary polymerised, typically to an average of 2,500 to 10,000 monomer units per main chain backbone, and

cross-linked, in step b), as necessary with removal of solvents, to form a solid matrix,

and in step c) the aprotic liquid is introduced.

Step c) may be effected, if necessary at elevated temperature, by immersing the matrix in the liquid. To prevent leaching or osmosis of the salt from the matrix the liquid should contain more of the salt eg as a 1 or 2 M solution.

However, for some salts in some matrices and liquids, higher concentration of the salt may unfavourably decrease the conductivity of the Solid Electrolyte, possibly by ion aggregate formation.

To prevent such incorporation of further salt in the matrix the chemical potentials of the salt in the matrix before dipping and in the solution should be roughly matched, unless of course it is desired to incorporate further salt in this way.

The optimisation of the conductivity is a matter of ready and routine trial.

In case ii) (steps a), b) and c) carried out in the order b), c) and a)), the salt is incorporated in a solution in the aprotic polar liquid of a material which is a precursor of a cross-linked polymer matrix (which material again may be a non-cross-linked polymer precursor of a cross-linked matrix, or an oligomer or monomer, or a mixture of such species) . Matrix formation thus involves cross-linking (e.g. as described hereinbefore and optionally polymerisation).

In brief, in such a case,

the salt is dissolved in the matrix precursor solution, which also comprises the polar aprotic liquid,

any other liquid vehicle is evaporated, to give a solid matrix precursor containing the greater part of the polar aprotic liquid,

the precursor is as necessary polymerised, typically to an average of 2,500 to 10,000 monomer units per main chain backbone, and cross-linked, to form a solid matrix, incorporating the aprotic liquid.

Some loss of aprotic liquid if present will occur during the evaporation.

However, a slight excess over the final desired content of aprotic liquid may be used to compensate for this.

To ensure that the desired quantity of the polar liquid will be retained in the product matrix:

a) the polar liquid and any other liquid vehicle will of course each be chosen for its (relative) volatility, and

b) the relative quantity of the aprotic polar liquid and the processing conditions will be chosen.

Such choice may be made on the basis of ready and routine calculation or trial.

Again, for some salts in some matrices and liquids, higher concentrations of the salt may unfavourably decrease the conductivity of the Solid Electrolyte, possibly by ion aggregate formation.

To prevent incorporation of further salt in the matrix than is desirable, the desirable concentration of salt in the product Solid Electrolyte should be roughly determined and a corresponding quantity of the salt used in the reaction mixture. The optimisation of the conductivity in this way is again a matter of ready and routine trial.

Where an un-cross-linked matrix precursor is used for conversion to a cross-linked matrix, the cast Solid Electrolyte so obtained is subsequently cross-linked, often into its final form.

Means are often provided to effect such cross-linking of the intermediate matrix after its formation as described hereinbefore.

Thus, eg a cross-linking agent/initiator is preferably incorporated in the fluid precursor formed in first step b).

Heat or irradiation (eg i.r., u.v., high intensity visible, gamma, or electron beam) or plasma is then applied to the intermediate cast product.

The fluid precursor as appropriate with a cross-linking agent and/or a solvent is preferably cast and cross-linked into its final form.

The steps of solvent loss and cross-linking may be carried out simultaneously by dissolving the matrix or a precursor thereof, the salt and any aprotic liquid in a suitable inert solvent, and allowing the solvent to evaporate.

Again, loss of aprotic liquid if present will occur during the evaporation, but may be countered as above.

Also, less often, as mentioned above, the precursor comprise a monomer or a solution thereof. Second step a) may be carried out in a number of variants as appropriate.

These include solvent removal, polymerisation and/or cross-linking in any feasible order.

The Solid Electrolyte generally has good physical properties such as tensile strength, elasticity, compressibility and tear resistance, in addition to a good ambient-temperature conductivity, without any need for conventional polymer matrix reinforcement, eg a filler.

However, it may if desired also contain a conventional particulate filler without significantly impairing its its electrical properties, provided that the filler is inert and stable in the matrix or any precursor thereof and under any processing conditions.

Suitable fillers include amphoteric, basic, and siliceous fillers.

The filler may be amphoteric, eg an oxide or hydroxide of this type. Suitable such fillers of this type include oxides and hydroxides of aluminium, including hydrated alumina. Such fillers may be of natural or synthetic origin.

A siliceous filler may consist of substantially pure silica, eg precipitated or fumed silica, sand, quartz or cristobalite.

Alternatively, it may contain silica together with a proportion of one or more metal oxides, eg acidic oxides such as titania, or metal oxides capable of forming silicates with it, eg oxides of calcium, magnesium and aluminium, and combinations of these.

It may consist of a silicate, provided that the silicate

a) is one which is suitable for use as a conventional filler and

b) is insoluble in the polar aprotic liquid in the Solid Electrolyte.

Suitable silicates include clays and talcs which can be produced in sufficiently finely divide form to serve as filler. The filler may comprise a silicate, eg it may be a silicate-coated alkaline earth metal carbonate.

The filler preferably consists essentially of finely divided ('fumed') silica.

Mixtures of all the foregoing particulate fillers may be used.

The filler particles for use in the Solid Electrolyte may have any form suitable for a conventional filler, and may have a wide variety of shapes and sizes. Most conveniently however, the particulate filler is a free-flowing finely divided powder, as is usually commercially available.

Most commonly the filler particles will thus have a size in the range of 0.1 to 100 micron, eg in the range of 0.25 to 200, eg 0.05 to 100 micron.

The particles may be of two widely different sizes if desired, in view of the good reinforcing effect from the higher filler loading that is then possible.

Typically the particles will have a specific surface area of 0.1 to 250 $m^2g^{-1}$.

The proportion of the Solid Electrolyte which is optional filler may be 0.1 to 25 wt%. For a filler of relative density of about 2, and a specific surface area of about 3 $m^2g^{-1}$, favoured proportions are 1.5 to 20 wt% filler, but favoured proportions will vary in a manner evident to the skilled man.

In an electrical device, such as an electrochemical cell, an electrolytic capacitor or electrochromic device, the Solid Electrolyte may be of any thickness provided it is cohesive and continuous.

It is clearly advantageous and preferred that it be as thin as possible.

It may typically be from 1000 to 2 $\mu$ thick, for example 200 to 10 $\mu$ and 100 to 10 $\mu$.

As for the electrodes (described hereinafter), at lower thicknesses the Solid Electrolyte or its precursor will have to be applied to a support, eg the anode and/or the cathode (either of which may in turn be supported as hereafter described), or pressed into a porous support, and any precursor cured in situ. The Solid Electrolyte is then often adhered to or embedded in the surface or the bulk of the support.

Preferably the support is a highly porous solid, and it may be inter alia a flat laminar body, eg a porous battery separator.

The support may be be a Porous organic polymer which is insoluble in the polar aprotic liquid in the Solid Electrolyte (eg a highly cross-linked polymer and/or a cellulose derivative). Suitable supports also include inter alia a Porous inorganic solid, such as a porous silica, metal hydroxide or hydrated oxide.

Painting a Precursor onto or forcing it into a (Porous) support as appropriate and forming the matrix in situ may be desirable in such cases.

Where the present device is an electrochemical cell or a capacitor, it is often arranged in the following order of layers with consecutive layers in mutual electrical contact:

first electrode,
Solid Electrolyte, and
second electrode.

The electrodes in a capacitor may be of any suitably inert and conductive material.

Such a material may be eg a metal conventionally used in such devices. Conductive current collectors

additional to and in contact with the electrodes may be necessary.

The anode in a cell generally comprises a material capable of oxidative electron loss to form a cationic species.

The cathode generally comprises a material correspondingly capable of receiving electrons to be reduced (ie a 'potential oxidant').

In one embodiment these electrode processes are reversible, so that the cell is a secondary cell.

Thus for example the anode may suitably be or comprise an alkali metal such as Na, K or preferably Li.

The metal may be comprised as an alloy component for example in a lithium aluminium alloy, or less favourably as a dopant in a potentially salifiable ('conductive') polymer in particular one with an extended delocalised electron system, for example poly(p-phenylene) or polyacetylene.

Often the anode material will be or comprise the same element as any alkali metal cation of the ionised salt in the Solid Electrolyte.

The anode may be of any thickness provided it is cohesive and continuous, and it is clearly desirable that it be as thin as possible.

The anode may typically be from 2500 to 5 micron thick, for example 250 to 50 micron.

It will be appreciated that at lower thicknesses the anode will have to be applied to a support, for example a cell wall and/or the electrolyte.

It may even be necessary to apply the anode to the support eg by vapour deposition.

Such a support may be or comprise a conductive mesh, foil or coating, current collector, for example of a metal, such as copper or nickel, equipped with at least one terminal or terminal attachment.

In use internal current conduction between anode and cathode takes place via cation (eg $Li^+$) migration through the Solid Electrolyte.

Correspondingly, in a device which is an electrochemical cell, the cathode may suitably comprise a higher oxidation state transition metal compound, ie one in which the transition metal is in a higher oxidation state from which it may be reduced to a lower oxidation state ie a potential oxidant.

Such compounds include transition metal chalcogenides, such as oxides, sulphides and selenides, eg $TiS_2$, $V_2O_5$, $V_6O_{13}$, $V_2S_5$, $NbSe_2$, $MoO_3$, $MoS_3$, $MnO_2$, $FeS_2$, CuO, CuS, transition metal complex chalcogenides such as phosphosulphides, eg $NiPS_3$, and oxyhalides eg $FeOCl_2$ and CrOBr,
transition metal complex nitrides such as halonitrides, eg TiNCl, ZrNCl and HfNBr and
other transition metal salts eg $Cu_3B_2O_6$, $Cu_4O(PO_4)_2$, $CuBi_2O_4$, $BiO(CrO_4)_2$ and $AgBi(CrO_4)_2$.

Favoured compounds include $TiS_2$, $V_6O_{13}$ and $MnO_2$, in particular $V_6O_{13}$ in which, in a device which is an electrochemical cell, the cathodic redox process is potentially reversible.

The cathode may as one, less favourable, alternative comprise a potential oxidant in the form of

a) an anion (p-) doped conductive polymer where the anion may be the same as that of the ionised salt, for example $CF_3SO_3{-}$ or $AsF_6{-}$ doped poly-p-phenylene, or

b) a neutral polymer with an extended delocalised electron system which on reduction gives a salifiable ("conductive") polymer which is doped by cations.

In the latter case doping typically occurs by diffusion in use of cations from the ionised salt of the solid electrolyte, for example reduced poly-p-phenylene n-doped with $Li^+$ cations.

Favourably, in a device which is an electrochemical cell, the cathode comprises a solid particulate dispersion of the potential oxidant and a highly conductive material in a matrix of a solid electrolyte.

Such a cathode matrix is preferably (in a further aspect of the invention) of Solid Electrolyte.

Typical and preferred solid electrolytes within the cathode include those so described for the Solid Electrolyte hereinbefore.

Any material of a suitably high conductivity may be used in the dispersion, for example carbon black, acetylene black, or metals, eg transition metals.

The proportions of the foregoing materials in the cathode in a device which is an electrochemical cell will typically be in the ranges of 10 to 80% potential oxidant, preferably 30 to 60%; 1 to 30% dispersed conductive material, preferably 2 to 10%; and 10 to 80% solid electrolyte, preferably 30 to 60%. All the above are weight percentages based on total cathode. The disperse phase is generally present in particles of less than 40 micron grain size, eg less than 20 or less than 3 micron.

The cathode may be of any thickness provided it is cohesive and continuous.

It is clearly advantageous and preferred that it be as thin as possible.

The cathode in a device which is an electrochemical cell may typically be from 1500 to 3, eg 1000 to 30 micron thick.

It will be appreciated that at the lower thicknesses, the cathode in a device which is an electrochemical cell will have to be applied to a support.

It may even be necessary to form the cathode in a device which is an electrochemical cell as a matrix in situ on such a support (matrix formation is described hereinbefore) having eg painted a precursor onto the support.

Such a support may be eg a cell wall and/or the electrolyte, and, as for the anode, may be or comprise a conductive mesh, foil or coating current collector.

For example, it may be of a metal such as copper or nickel, equipped with at least one terminal or terminal attachment.

Where, in a device which is an electrochemical cell, the cathode comprises a solid electrolyte or Solid Electrolyte, it or its precursor may be pressed into a coarsely porous support. The cathode is then often adhered to or embedded in the surface or the bulk of the support.

The support may be a highly porous solid, and it may be inter alia a flat laminar body, eg a porous battery separator.

Such a support may be a porous organic polymer which is insoluble in the polar aprotic liquid in the Solid Electrolyte (eg a highly cross-linked polymer and/or a cellulose derivative).

Suitable supports also include inter alia a porous inorganic solid, such as a porous silica or metal hydroxide or hydrated oxide.

Painting a precursor onto or forcing it into a (porous) support as appropriate and forming the matrix in situ may be desirable in such cases.

In a further aspect of the invention, in a device which is an electrochemical cell, the cathode may be made in substantially the same general manner and preferred manner as the Solid Electrolyte.

However, there is the additional step d):

d) conventionally dispersing the potential oxidant and conductive material in the matrix or a precursor thereof.

In the case of a polymer matrix the steps are preferably carried out

i) in the order a), d), b) and c), or

ii) in the order b), c), and d) using a matrix precursor, followed by a).

Cathode matrix formation thus also involves cross-linking a species which is a precursor of a cross-linked polymer matrix.

Where the present device is an electrochromic device, it is often arranged in the following order of layers with consecutive layers in mutual electrical contact:

first electrode,
electrochromic material,
Solid Electrolyte,
optional electron/ion source/sink, and
second electrode.

The electrodes in an electrochromic device may be of any suitably inert and conductive material.

Such a material may be eg a metal conventionally used in such devices. Conductive current collectors additional to and in contact with the electrodes may be necessary.

Subject to necessary limitations as to transparency and/or translucency and the special case of an ion source anode described further below, the two electrodes in such an electrochromic device may generally be made of any material of a suitably high conductivity and the desired optical properties.

Transparent or translucent electrode layers may suitably be formed as a thin coating of a transparent or translucent electrically conductive material at a loading to give a sheet resistance of less than 20 ohm per square.

Suitable transparent conductive materials for such electrodes in such an electrochromic device include

a) certain metal oxides and mixed oxides, such as indium and tin oxides, and

b) mixtures and mutual solid solutions thereof, eg indium tin oxide.

Suitable transparent conductive materials also include

fluorine-doped tin oxide;
optionally aluminium-doped zinc oxide, cadmium tin oxide and antimony tin oxide; and
mixtures and solid solutions thereof, both mutually and/or with tin oxide and/or indium oxide.

The electrode material may as an alternative comprise a plastic which is transparent/ translucent at the operating wavelengths.

For example, the first electrode material may as an alternative comprise an anion (p-) doped conductive polymer where the anion may be the same as that of the highly ionised salt in the Solid Electrolyte.

Such a first electrode polymer may be eg $AsF_{6-}$ doped poly-p-phenylene.

The skilled man will appreciate which of such polymers may be used at visible wavelengths, and any limitations on the permissible thickness of a layer of such materials.

As another alternative, the first electrode may comprise a neutral polymer with an extended delocalised electron system which on reduction gives a salifiable ("conductive") polymer which is doped by the incorporation by diffusion in use of cations from the highly ionised salt of the Solid Electrolyte. Such a first electrode polymer may for example be reduced poly-(p-phenylene) n-doped with $Li^+$ cations.

The second electrode in the device may similarly comprise a potentially salifiable ('conductive') polymer.

Such an second electrode polymer may in particular be one with an extended delocalised electron system, for example poly(p-phenylene) or polyacetylene, containing eg an alkali metal as a dopant.

Often the second electrode material may be or comprise the same element as any alkali metal cation of the highly ionised salt in the Solid Electrolyte.

Again, the skilled man will appreciate which of such polymers may be used at visible wavelengths, and any limitations on the permissible thickness of a layer of such materials.

Suitable electrode materials which are transparent at visible wavelengths also include:
certain metals, such as gold, silver and copper;
mixtures and alloys of the foregoing metals; and
any of such metals and their alloys, in admixture or mutual solid solution with the abovementioned oxide materials for the electrodes in such an electrochromic device;
all as conductive thin transparent layers or films.

Alternatively where the electrode does not have to be transparent or translucent at visible wavelengths, the electrode may comprise a thick layer of a metal such as aluminium.

Often such an electrode comprises a corrosion-resistant metal, such as chromium or nickel.

There are a number of embodiments of the electrochromic device of the present invention which may be used to achieve an electrochromic (eg visible) change in a conventional electrochromic material activated by species migrating in or out of the electrohromic material in operation.

In all such embodiments, however, a reversible source or sink as appropriate of suitable activating species is required.

Whether they are ions (or their atomic precursors) or electrons, a source or sink is needed to supply or accept all of the ions or electrons necessary to bring about the desired (eg visible) change in the device when activated.

Where the electrochromic material in the device is activated by electrons, these may be supplied to the electrochromic material by any convenient pathway.

Subject to the provision of a relevant pathway, any conductive component of the device may act as an electron source/sink under the application of a potential across the component electrodes, and there is no need for a specific source/sink component.

The electrochromic material in the present device is however often one activated by the receipt of ions, eg metal ions, such as an oxide bronze or related material, where eg the activating metal ion species is an alkali metal (eg lithium), silver or copper.

Suitable source materials for the present devices which are electrochromic devices will be known to the skilled man.

In such case, the second electrode (the anode) remote from the electrochromic material layer may eg comprise a corresponding metal to act as a source for the activating ions.

The activating ions for the electrochromic material may conveniently be the cations of the ionised salt in the Solid Electrolyte.

The activating ions may thus eg be alkali metal ions, in particular lithium ions. However, where the activating ions are alkali metal ions (and the Solid Electrolyte optionally but conveniently contains the same cations), there is a prejudice in the art against making the second electrode out of the corresponding alkali metal. This is because of the supposed inconvenience of the known reactivity of the free metal.

However it is believed to be possible in the present devices conveniently to make the second electrode of an appropriate source/sink for the activating species, such as alkali metal, eg lithium, to furnish the required ions.

Thus for example in such an embodiment, the second electrode may suitably be or comprise not only silver or copper, but alternatively an alkali metal such as Na, K or preferably Li.

An alkali metal may be comprised as

a) an alloy component for example in a lithium aluminium alloy (in a reflective device) or

b) as a dopant in a potentially salifiable ('conductive') polymer, in particular one with an extended delocalised electron system, for example poly(p-phenylene) or polyacetylene.

Such second electrode material may be or comprise the same element as any alkali metal cation of the highly ionised salt in the Solid Electrolyte.

Where the transmission properties of the electrode or any part of it are not important (as described above) layers of any of the above materials which are so thick as not to transmit e.m.r. at the operating (eg visible) wavelengths adeqately may be used as electrode materials.

Suitable electrochromic materials for the present devices which are electrochromic devices will be known to the skilled man.

In particular he will be aware of those materials which are activated by ions, especially where the activating ions may eg be alkali metal ions.

The device generally may be made up by conventional layering/coating techniques.

For example, where the device is an electrochemical cell in the form of an elongate strip, a copper or nickel mesh, foil or coating strip may be laid down (eg by evaporation) on, or secured to, an insulative thermoplastics sheet.

Thereafter, in a device which is an electrochemical cell, the cathode may be laid on the sheet.

Alternatively, in particular for very thin cathodes:

a) a fluid precursor of the cathode (a solution or dispersion of the cathode materials in a suitable vehicle, for example acetonitrile, or,

b) in the case of a cathode comprising any organic polymer, a precursor comprising a polymerisation precursor of the polymer)

may be

i) applied to the product sheet, eg using a doctor blade, followed by any necessary solvent insertion and/or curing, or

ii) forced into a coarsely porous sheet which is co-extensive with the above mentioned metal coated plastics sheet, followed in either order by any necessary solvent insertion and/or curing, and by laying the supported product on the thermoplastics sheet.

The Solid Electrolyte may then be laid on the cathode, or, as for, in a device which is an electrochemical cell, the cathode, a fluid precursor of the Solid Electrolyte may be

i) applied to the cathode and converted to the Solid Electrolyte, or

ii) forced into a porous plastics or other organic sheet, followed in either order by any necessary solvent insertion and/or curing, and

laying the suported product onto the cathode.

Finally, strips of anode (eg lithium) foil, any copper or nickel current collector optionally on any insulator layer and the insulator layer itself may be applied in order.

The order of steps may of course be reversed as desired.

The insulator sheets may then be sealed around the edges, and any further encapsulation carried out.

The capacitor device may be made up analogously.

The capacitor or cell assembly described above is desirably sealed into an insulative envelope. Any such envelope is preferably a moisture and air impervious one eg a barrier plastic.

Where the assembly is in a preferred thin- film embodiment, it may be mounted flat and the device assembly sandwiched by two thermoplastic films, eg of a polyester or a polyethersulphone.

The edges of the films are heat-sealed, optionally also with adhesive, to enclose the assembly, which may be further enclosed in eg a barrier plastic such as Viclan (ICI).

It can also be mounted on a conventional circuit substrate and sealed to the substrate by a thermoplastic or thermoset plastics cover.

A large surface area high capacitance embodiment of the capacitor or similar high-current embodiment of the cell is one in the form of a roll.

In this embodiment the components are overlying strips made into a roll, and only one insulator layer is required, the assembly being sandwiched by the radially inner and outer faces of adjacent turns of the insulator. If desired the roll faces may be covered (to seal the assembly) with a layer of similar insulator.

All the foregoing device assemblies may of course be made up with rigid outer sheets; these are optionally then subjected to lamination in a jig for lamination, as described hereinafter. hereinafter in respect of electrochromic devices to seal the assembly well together.

The electrochromic device may be made up analogously.

Thus, where the electrochromic device is to operate in transmissive mode, a sheet which is transparent or translucent at the operating wavelengths, eg for use at visible wavelengths a glass pane or a thermoplastics film, 0.15 to 40 mm thick, is coated conventionally on one face with a transparent conductive electrode material, eg a thin layer of indium tin oxide. This is typically of a thickness and other properties described hereinbefore.

(It will be appreciated that the same starting layers may be used in the fabrication of a visible wavelength reflective-mode device where the reflection is to be through these layers from the far side of the device, eg from the other electrode.)

Alternatively, the electrochromic device may be in the form of a reflective visible display with reflection from the side of the device nearest to the electrochromic layer.

In this case as a starting point a reflective nickel foil, sheet or layer electrode may be laid down (e.g. by evaporation) on, or secured to, a glass pane or an insulative thermoplastics web.

In either type of device, a thin layer of an electrochromic material is then deposited on the electrode-coated face of the sheet.

Thus, an oxide bronze or related electrochromic material of a transition metal in a higher oxidation state may be deposited, eg as described in GB-B 2081922, typically by evaporation at a controlled rate.

Alternativly, such an oxide bronze or related electrochromic material or an electron-activatable oxide of a transition metal in a higher oxidation state may be applied by (optionally reactive) sputtering, eg magnetron sputtering of respectively tungsten or nickel metal in the presence of oxygen.

In the fabrication of eg an electrochromic display device of the present invention which comprises any discontinuous and/or segmented layer, various stages of mechanical masking appropriate to the conformation of that layer may be required during the deposition of that layer, as will be clear to the skilled man.

Thus, various patterns, eg a segmental display, may be built up using metal masks to delineate any electrode and/or the electrochromic material.

Similarly, it is often generally convenient to mask an area of the electrode surface effectively to form in the product a lug of the electrode projecting beyond the layer of elecrochromic material.

An electrode lead, eg adhesive copper tape, is attached conventionally to the electrode layer of any of the foregoing types, eg it may be applied to the exposed lug(s) referred to above.

In the next stage, the Solid Electrolyte is deposited upon the layer of electrochromic material.

The Solid Electrolyte may be added as a discrete component into the device of the present invention, or it may be made in situ on the layer of electrochromic material.

In the former case, it may typically be cast and optionally cross-linked into a sheet or thin film of Solid Electrolyte or an uncrosslinked precursor thereof ex situ, and the product sheet or film applied to the electrochromic layer.

It may be as necessary further processed in a device of the present invention. For example, an uncrosslinked precursor may be cross-linked in situ, typically in the fully fabricated device.

Alternatively, the Solid Electrolyte is typically formed (as noted hereinbefore) by

a) forming the matrix in situ

b) incorporating the highly ionised salt in the matrix or a precursor thereof, and

c) optionally introducing the aprotic liquid into the matrix or a precursor thereof.

The steps a) and b) and optionally c) are preferably carried out in the order b) and optionally c), using a matrix precursor, and then a).

Thus, typically a fluid precursor of the Solid Electrolyte comprising the matrix or a precursor thereof, the salt and any aprotic liquid, as appropriate with a cross-linking agent is made up in the first step b) and optionally c), and is applied to the above product, eg using a doctor blade, followed in step a) by any necessary solvent removal and/or curing, although as also noted hereinbefore curing may often be carried out in the fully fabricated device.

(The precursor may be:

a solution or dispersion of the Solid Electrolyte in for example acetonitrile;

(often) a precursor comprising a cross-linkable precursor of the Solid Electrolyte polymer; or

(less often) a polymerisation precursor of the Solid Electrolyte polymer.)

In another less usual option, steps c) is effected after steps b) and a) in that order.

That is, in the final step c) the aprotic liquid is introduced by exposing the product Solid Electrolyte (or cross-linkable precursor) in situ on the electrochromic material layer to the vapour of the liquid.

If the device is to comprise an optional ion source/sink as described hereinbefore, a layer of that material is then put into contact with the layer of Solid Electrolyte/precursor.

This is often most conveniently effected by depositing a thin layer of a source/sink material on an inner electrode-coated face of a second outer sheet of transparent or translucent material which forms the second electrode of the device.

Where such a source/sink material is an oxide of a transition metal in a higher oxidation state doped with the activating species for the device, eg vanadium pentoxide doped with lithium, the oxide may be applied by (optionally reactive) sputtering, eg magnetron sputtering of vanadium metal in the presence of oxygen. The oxide may be doped electrochemically, eg by making the electrode the cathode in a lithium salt solution electrolyte.

Again, mechanical masking appropriate to the desired conformation of the source/sink layer may be required during the deposition of that layer, as will be clear to the skilled man.

The electrode is then contacted with a lead, by placing the latter on the electrode, as described above for the first electrode bearing the layer of electrochromic material, to form an electrode sub-assembly.

This sub-assembly is then laid upon the rest of the device with the electrode or the optional ion source/sink material on the electrode in contact with the Solid Electrolyte/precursor.

Typically, in a transmissive device, the second electrode layer and sheet will be the same as the first electrode layer and sheet respectively, as described above, and often no source/sink material is present.

As a (less usual) alternative to the foregoing methods,

a) the source/sink material (if present) may be deposited on the Solid Electrolyte or its precursor, and/or

b) the second electrode may be deposited on the Solid Electrolyte or its precursor or the source/sink material if present, by any of the aforementioned methods which may be applicable.

The order of all the foregoing steps may of course be reversed as desired.

In a second variant, the above procedure is followed up to the deposition of the Solid Electrolyte/ precursor layer, where a Solid Electrolyte/precursor layer of only half the desired final thickness is laid down.

A second glass or plastics layer is similarly prepared, bearing the second layer electrode layer of eg indium tin oxide.

If the device is to comprise an optional ion source/sink as described hereibefore, a layer of that material is laid down upon the second electrode layer.

A second layer of the Solid Electrolyte/ precursor is then laid down on the second electrode or the source/sink material layer as appropriate.

Again, this layer of Solid Electrolyte/precursor will be only half the desired final thickness of the Solid Electrolyte/ precursor in the present device.

The two Solid Electrolyte/precursor half layers are then conventionally bonded face-to-face optionally by lamination to form a transmissive device of the present invention.

A reflective device where reflection is from the side of the device furthest from the electrochromic material is made by depositing, by the techniques generally described above, transparent layers which are essentially the same as those described above.

However, the second electrode and/or the layer behind it will clearly be different.

Thus, as the first step, a layer which is reflective at the operating wavelengths is laid down; this layer may form the second electrode, and optionally the source sink for activating metal ions for the electrochromic material.

In the case of a device operating at visible wavelengths, this reflecting electrode may be eg nickel foil or polished aluminium foil or sheet.

In the same case, the electrode may act as an activating ion source/sink.

It may then be eg polished aluminium containing dissolved lithium as described hereinbefore, or polished lithium foil. (The device will of course have to be assembled in a dry inert atmosphere to preserve the reflectance of the last-named second electrode.)

An optional current collector, and any final insulator layer may then be applied in order.

Again, the order of these steps may be reversed if desired, eg in a variant of the device, in which the backing to the second electrode (on which the whole of the device is built up) is a ceramic substrate.

Such a substrate may be one for an electrical circuit of which the present device forms a part.

The final transparent layer in this variant may conveniently be an encapsulation layer of transparent silica, conventionally sealed to the substrate.

All the foregoing device assemblies with rigid outer sheets are optionally then subjected to lamination in a jig for lamination, as described hereinafter.

In a variant of the assembly process the device assembly before lamination comprises an uncrosslinked precursor of the Solid Electrolyte, optionally also containing a cross-linking agent/initiator, and this is cured in the lamination jig.

Finally, in all the above embodiments the edge seal is made, eg using an epoxy resin or a hot-melt adhesive or a thermoplastic onto glass or ceramic.

Thus, in a further aspect the present invention provides a process for preparing a device of the present invention, characterised by in any order

a) coating a electrochromic material which is capable of being activated by ions onto a first electrode as a thin film on a first support with the solid electrolyte of claim 1 or a precursor thereof,

b) coating an activating ion source onto a second electrode as a thin film on a second support,

c) contacting the solid electrolyte with the source material,

d) jig laminating all the foregoing integers together, and

e) optionally converting any precursor to the solid electrolyte.

The jig device is depicted in Figure 5, and described in greater detail hereinafter.

The device is one whereby two rigid, eg glass and/or plastics sheets coated with the other internal components/precursors of the desired device of the present invention can be held at a contollable distance apart with the internal components/precursors in contact, and laminated under pressure within a vacuum.

This variant has the advantages that

1. The interfaces in the device precursor are kept apart while the vacuum is applied. This ensures that no air is trapped and that the solid Electrolyte is not crushed in the lamination process.

2. The outer sheet substrates are held in a desired conformation, eg planar or curved, by the jig device.

3. The thickness of the resulting laminated films may be controlled by choosing the dimensions of the device and if necessary by inserting shims.

4. Only one outer sheet need be coated before lamination.

5. The jig device may be provided with electrical heating elements, so avoiding the need to have to heat the assembly externally (eg using an oven).

An alternative method is useful where the outermost substrate layers are relatively rigid and separated by an edge seal (eg a window).

In this alternative method, a fluid precursor of the Solid Electrolyte comprising a polymerisation precursor of the Solid Electrolyte polymer (without a solvent) may be cast and polymerised and/or cross linked into the Solid Electrolyte in situ in the device eg as a sheet or thin film.

In such a process the whole device is assembled without the Solid Electrolyte/precursor layer, generally as described above and typically with a space between an electrochromic layer and a non-contiguous electrode and/or optional sink/source material.

The fluid precursor is then injected into the space, typically via a temporary or sealable permanent channel of a size appropriate to the viscosity of the fluid in a thermoplastics edge seal.

This is followed by any necessary polymerisation and/or cross-linking.

The edge seal may be supplemented by an additional seal or replaced by an alternative one.

This variant has the advantages of not requiring solvent removal, a dry or clean room, handling of the film or any laminating process.

In common with such devices generally, the fabrication of the present devices needs to be carried out with care to achieve good performance in the product.

Cells of the present invention are capable of current densities of more than 0.5 $A/m^2$ eg of the order of 1 $A/m^2$ and above. Typical voltages are in the range of 2.5 to 4 V. Energy densities in excess of 150 Wh/kg may be produced.

The present invention, including the preparation and properties of uncrosslinked matrix precursors of the Solid Electrolyte, and any cross-linking of the precursor to form the Solid Electrolyte, is illustrated in the following Examples.

The preparation and properties of matrix precursors for the Solid Electrolyte is illustrated in the following Descriptions.

Description 1

Preparation of an Ethylene Oxide (EO)/Methyl Digol Glycidyl Ether (MDGE)/Allyl Glycidyl Ether (AGE) Matrix Precursor (Uncrosslinked Terpolymer) (D1)

Methyl digol glycidyl ether is of formula

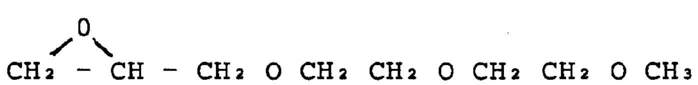

A catalyst was made following the technique of E J Vandenberg, Journal of Polymer Science Part A-1 Vol 7 Pages 525-567 (1969) as follows. All steps were effected in an inert nitrogen atmosphere.

A 25% solution of $Et_3Al$ (Et means ethyl) in heptane was diluted with dry diethyl ether to a concentration of 0.5 moles per litre, cooled to 0°C and water (0.5 mole/mole $Et_3Al$) was added dropwise with stirring over 15 mins. Acetylacetone (0.5 mole/mole $Et_3Al$) was added dropwise with stirring at 0°C. Stirring at 0°C was continued for 15 mins; this was followed by stirring overnight at room temperature.

The following materials were charged to a stirred nitrogen purged 400 ml stainless steel autoclave; MDGE (19 ml), AGE (4 ml), and toluene (200 ml).

Catalyst as above (18 ml) and ethylene oxide (10ml, as a liquid) were then added whilst continuing to stir throughout and the temperature was raised to 110°C for 2 hours.

The hot viscous polymer solution produced was discharged into a 1 litre jar containing 5 ml methanol to inactivate the catalyst.

The autoclave was given two hot washes with a total of 500 ml toluene. The washings were bulked with the polymer solution and thoroughly mixed.

The polymer solution was rotary evaporated to a volume of 300 ml and cast in a polyester tray in a fume cupboard. The cast solution was left overnight for the solvent to evaporate.

The product terpolymer (D.1) was finally dried in a vacuum oven at 80° overnight to give 18.4 g of a sticky, rubbery product.

Molecular wt of the product was measured by gel permeation chromatography using lithium bromide in dimethylformamide as solvent. MW = 380,000

100 MHz NMR was used to measure the relative amounts of the three monomers incorporated in the final terpolymer which were:-

77.9 mole % EO
17.5 mole % MDGE
4.6 mole % AGE

Example 1

i) Incorporation of Salt in Matrix Precursor (Uncrosslinked Polymer); Measurement of Conductivity of Uncrosslinked Film

1 g of terpolymer (D1) was dissolved in 25 ml dry acetonitrile with stirring under a nitrogen atmosphere.

Lithium triflate ($CF_3SO_3Li$) was added to the solution to give a ratio of 16:1 oxygen atoms present in the polymer to lithium ions.

The solution was cast into a glass/polytetra fluoroethylene mould and the solvent allowed to evaporate slowly under a stream of nitrogen.

The 200 μm thick film was dried at 80° under vacuum for 4 hours to remove any traces of water or solvent.

The ionic conductivity of the film over a range of temperatures was measured by standard AC impedance techniques.

Conductivity 20°C = $2 \times 10^{-5}$ mho.cm $^{-1}$

ii) Incorporation of Salt in Matrix Precursor (Uncrosslinked Polymer); Forming the Matrix by Cross-linking the Precursor

a) 1 g of terpolymer (D1) was dissolved in 25 ml acetonitrile with stirring and lithium triflate was added to give a 16:1 oxygen to lithium ratio.

1.0 wt % dry benzoyl peroxide was added to the solution which was cast as above into a 200 μm film onto a polytetrafluoroethylene backing under a stream of nitrogen.

The film was lightly cross-linked by heating in a vacuum oven at 110°C for 30 minutes.

Conductivity 20°C = $3.5 \times 10^{-6}$ mho.cm $^{-1}$

b) An acetonitrile solution of terpolymer (D1) (10% w/w). lithium triflate (22% w/w) and benzoyl peroxide (2% w/w), is cast into a film, and the film is cured, as in a) above to give a 50 μm thick film.

iii) Introducing the Liquid into the Matrix; adding Polar Aprotic Liquid

The following 1 M solutions of lithium perchlorate were used as the polar aprotic liquid:

propylene carbonate (PC),
1:1 propylene carbonate/ethylene carbonate (EC),
tetraethylene glycol dimethoxy ether (TEGDME)
3:7 propylene carbonate/dimethoxyethane (DME)

Polar aprotic liquid was placed in the bottom of a Kilner jar and molecular sieve added to it. The dried cross-linked film from ii) a) above (c. 39 cm$^2$ on a polytetrafluoroethylene backing was placed in the liquid for several hours (generally in excess of 16 hr. at room temperature to equilibrate).

In all cases the polymer film absorbed a proportion of the liquid and greatly expanded, and the swollen film pulled away from the backing. The excess liquid was drained off, and the the film was tipped out onto a bed of absorbent paper, and laid flat using tweezers.

Solid Electrolytes (E1.1) to (E1.4) were produced in this way. All these electrolytes are listed in the Table hereinafter.

Pieces of the film were cut off with a scalpel and placed between the current collectors of a cell holder to determine their conductivity in accordance with Example 9 The remaining film was weighed to determine the liquid uptake as % weight increase. All the results are listed in the Table hereinafter.

The procedure is repeated using 1 M solutions of lithium perchlorate in the following liquids to produce the following Solid Electrolytes:

| | |
|---|---|
| Sulpholane | (E1.5) |
| Methyl digol carbonate | (E1.6) |
| N-methylpyrrolidone | (E1.7) |

The dried cross-linked film from ii) b) above is similarly treated with PC to a 350% weight increase to give Solid Electrolyte (E1.8).

All these Solid Electrolyte films are self-supporting, handleable handle and adequately dimensionally stable.

The films are kept dry before use in a device.

## Description 2 and Example 2

### One-Pot Incorporation of Salt and Liquid in Matrix Precursor (Uncrosslinked Polymer); Forming the Matrix by Cross-linking the Precursor

1 g of terpolymer (D1) was dissolved in 25 ml acetonitrile with stirring and lithium triflate was added to give a 16:1 oxygen to lithium ratio.

Dry benzoyl peroxide (0.01 g)_and propylene carbonate (1 g) were added to the solution which was cast as above into a 200 μm film onto a polytetra-fluoroethylene backing under a stream of nitrogen.

The film was lightly cross-linked by heating in a sealed container at 110°C for 45 minutes, to give Solid Electrolyte (E2.1). The film was elastic and easily handled.

Conductivity 20°C = $7.0 \times 10^{-4}$ mho.cm $^{-1}$

The following polar aprotic liquids are also used in place of the above 1 g of propylene carbonate to give the Solid Electrolytes numbered in the brackets:

| | |
|---|---|
| 1:1 propylene carbonate/ethylene carbonate (EC) | (E2.2) |
| tetraethylene glycol dimethoxy ether (TEGDME) | (E2.3) |
| 3:7 propylene carbonate/DME | (E2.4) |

## Description 3 and Example 3

Deleted

## Description 4 and Example 4

### One-Pot Incorporation of Salt and Liquid in Matrix Precursor (Uncrosslinked Polymer); Forming the Matrix by Cross-linking the Precursor

A mixture of the following dried components: polymer (D.1) (6 wt%), acetonitrile (49 wt%), propylene carbonate (42 wt%) and lithium perchlorate (3 wt%) was made up in a dry atmosphere.

To each of 3 aliquots of this solution (A, B and C) was added benzoyl peroxide (2 wt% wrt polymer) in dry acetonitrile.

Additionally, poly(ethylene glycol) 200 dimethacrylate was added to the solution B, and triethylene glycol diacrylate was added to the solution C, both to 5 wt% wrt polymer.

2 ml aliquots of each of these three solutions were cast as above into a film into 35 mm i.d. glass rings on a polytetrafluoroethylene backing under a stream of nitrogen.

Each film was lightly cross-linked by heating in a sealed container at 100°C for 45 minutes, without significant loss of propylene carbonate, to give Solid Electrolytes (E4.1) to (E4.3) respectively.

The films so formed were between 300 and 700 microns thick, with excellent mechanical properties (ie elastic and tear-resistant). The conductivities of (E4.1) to (E4.3) as measured in a dry environment are given in the Table.

Example 5

Introducing the Liquid into a Preformed Matrix

The film of (E4.2) of Example 4 was immersed in a 1 M solution of lithium perchlorate in propylene carbonate for several days.

The film swelled to approximately 18 times its original volume (as determined by direct measurement). The excess liquid was drained off, and the the film (E5.1) was tipped out onto a bed of absorbent paper.

The film was then heated at 120° under reduced pressure for 18 hours, and weighed to determine the liquid loss as % weight decrease, to show a liquid content of 99 wt%.

The procedure is repeated using 1 M solutions of lithium perchlorate in the following liquids to produce the following Solid Electrolytes:

| | |
|---|---|
| 1:1 propylene carbonate/ethylene carbonate (EC) | (E5.2) |
| tetraethylene glycol dimethoxy ether (TEGDME) | (E5.3) |
| Sulpholane | (E5.4) |
| Methyl digol carbonate | (E5.5) |
| N-methylpyrrolidone | (E5.6) |

The films are kept dry before use in a device.

Example 6

To a solution of polymer (D.1) (20 weight %), prepared as in acetonitrile (80 wt%) in a dry atmosphere was added a concentrated solution of lithium perchlorate (22 wt% wrt polymer) and benzoyl peroxide (2 wt% wrt polymer).

The mixture was subjected to rotary evaporation (with some loss of acetonitrile) to give a homogeneous viscous solution.

To the second of 3 aliquots of this solution (A, B and C) ie to B was similarly added poly(ethylene glycol) 200 dimethacrylate, and to C was added triethylene glycol diacrylate, both to 5 wt% wrt polymer.

These three solutions were cast into films on A4 sheets of polytetrafluoroethylene backing using a doctor blade, to a wet coat thickness of 1 mm. The films were dried under a stream of dry nitrogen.

Each film was lightly cross-linked by heating in a sealed container at 120°C for 60 minutes under vacuum, with significant loss of acetonitrile.

20 mm square portions of the films were the immersed in 1M lithium perchlorate solution and subsequently handled and their conductivity determined, all as described in Example 9.

These were Solid Electrolytes (E6.1) to (E6.3).

Example 7

Preparation of Supported Solid Electrolyte by Cross-linking a Precursor in Situ

Three polymer solutions A, B and C were made up as described in Example 2, except that the acetonitrile solvent was stripped off under reduced pressure prior to the addition of the diacrlyic species to B and C, to give solutions containing propylene carbonate and polymer in the weight ratio of 7:1.

30 ml of each of A, B and C was placed separately on top of a 35 mm diameter circle of Whatman battery separator in turn placed on the filter paper grid of a Millipore pressure filter.

A pressure of 5 lb/sq.in was applied to force the mixture through the separator, until it began to appear on from the bottom of the filter.

Each impregnated separator was removed and placed on a 125 micron thick backing sheet of polytetrafluoroethylene, and heated in a sealed container at 110°C for 45 min to cross-link the polymer.

The product supported Solid Electrolytes (E7.1) to (E7.3) (the conductivity of which was determined as described in Example 9) were mechanically stable and easily handled.

Description 8 and Example 8

One-Pot Incorporation of Salt, Filler and Liquid in Matrix Precursor (Uncrosslinked Polymer); Forming a Filled Matrix by Cross-linking the Precursor

Three polymer solutions A, B and C were made up as described in Example 5, except that fumed silica (Aerosil 130, Degussa; 6 wt% wrt combined polymer and propylene carbonate) were mixed homogenously into each solution.

2 ml aliquots of each of these three solutions were cast as in Example 5 into 35 mm i.d. glass rings on a polytetrafluoroethylene backing under nitrogen, and cured to give films as described in Example 5.

Their conductivity was determined as described in Example 9. These were Solid Electrolytes (E8.1) to (E8.3).

Example 9

Measurement of Conductivity of the Solid Electrolyte

The ionic conductivity of the foregoing Solid Electrolyte films was measured by standard AC impedance techniques using a Solartron 1250 frequency response analyser.

The results are shown in the following Table, in which conductivities are at 23°C unless otherwise indicated by the temperature values in the following brackets.

TABLE

| Solid Electrolyte | % Liquid wrt (Liquid + Polymer) | Conductivity mho.$cm^{-1}$ x $10^4$ | | |
|---|---|---|---|---|
| (E1.1) | 88 | 40 | 3 | (-30) |
| (E1.2) | 89 | 44 | 5 | (-30) |
| (E1.3) | 83 | 24 | 3 | (-30) |
| (E1.4) | 83 | 16 | 1 | (-30) |
| (E3.1) | 88 | 36 | | |
| (E3.2) | 88 | 34 | | |
| (E3.3) | 88 | 35 | | |
| (E6.1) | 87 | 70 | | |
| (E6.2) | 75 | 20 | | |
| (E6.3) | 75 | 20 | | |

Example 10

Preparation of a Composite Cathode (C1) comprising the Solid Electrolyte

A solution as in Example 1ii)b) - above, but containing, in addition to the terpolymer (D1) and the other components, 9.5 g of a mixture in dispersion of $MnO_2$ powder (45% w/w) and carbon black powder (5% w/w), was cast and cured as in Example 1ii)b) to give a 60 μ thick film cathode (C1).

Example 11

Preparation of a Composite Cathode (C2) comprising the Solid Electrolyte

A slurry was made up in a micronising mill-pot over 30 min, containing propylene carbonate (60.5 wt%),

polymer (D1) (8.5 wt%), lithium perchlorate (4 wt%), triethylene glycol diacrylate (0.9 wt%), $MnO_2$ powder (19.7 wt%), carbon fibre (0.8 wt%) and carbon black powder (5.6 wt%).

This was cast and cured as in Example 4 to give a 500 μ thick film.

Example 12

Preparation of a Cell Assembly Comprising the Solid Electrolyte

An electrical device, such as an electrochemical cell was constructed in an argon atmosphere by laying a film of Solid Electrolyte (E4.1) prepared as in Example 4 on co-extensive film of cathode material (C2).

A co-extensive 250 micron thick lithium metal foil was placed on the upper surface of the Solid Electrolyte.

The whole sandwich structure was biased together in a spring-loaded cell holder to form a solid state device.

This device contained approximately 70 wt % propylene carbonate and has an open circuit voltage of 3.52 V and an energy density of 210 $W.hr.l^{-1}$.

Example 13

A Cell Assembly Comprising the Solid Electrolyte

The assembly of a device (which is an electrochemical cell) in accordance with the present invention is described below with reference to the accompanying drawings (not to scale) in which:

Figure 1 is a side elevation of the cell assembly.

Figure 2 is a plan section of the assembly viewed along AA in Figures 1 and 3.

Figure 3 is a cross section of the cell assembly viewed along BB in Figure 1.

The film 1 of Solid Electrolyte (E1.10) prepared in Example 1 (ii) (b) is sandwiched between and bears resiliently against a coterminous layer 2 of cathode film C1 (Example 10) and a coterminous 50 μm thick lithium foil 3 anode (the layer, film and foil being mutually in register) to produce a cell 4, 600 $mm^2$ in plan area.

The cell 4 is heat-sealed between two sheets 5 of polyester (Melinex; ICI), each coated, on the face so biased into electrical contact with the anode or cathode of the cell, with a nickel coat 6 (100 μm thickness of nickel on 120 μm thick plastics film).

The nickel acts as a current collector from the anode or cathode respectively.

The sheets 5 are of the same planar dimensions although larger than the cell 4 in plan and are sealed around the cell 4 with only their long edges in register, to form end lugs 7 with metal faces 8. Sealing is effected around the edges of the cell 4 with a layer 9 of adhesive.

The sealed cell (excluding most of the lugs 7) is coated with a layer 10 of an air and water impervious barrier polymer (Viclan, ICI).

The projecting lugs 7 are used for external connections to the cell, and may if desired be fitted with appropriate terminals.

The resulting cell assembly is less than 1 mm thick.

Description 14 (i)

Preparation of Zinc Dethyl/Glycerol Catalyst System

This catalyst was prepared according to the technique described by Hercules Powder Co. (British Patent 927 817.

A 25(w/w)% solution of $Et_2Zn$ (Et = ethyl) in heptane at 0°C was diluted with dry diethyl ether to a concentration of 0.5 molar. The resulting solution was kept at 0°C and glycerol (0.53 mole/mole $Et_2Zn$) was added dropwise with stirring over 30 minutes.

Stirring at 0°C was continued for 30 minutes The product catalyst, a fine white precipitate in a clear supernatant, was further stirred overnight at room temperature.

This catalyst was used in Description 14 (iv) and (v).

Description 14 (ii)

Preparation of Zinc Diethyl Mixed Polyol Catalyst System

A 25 (w/w %) solution of $Et_2Zn$ (Et = ethyl) in heptane at 0°C was diluted with dry diethyl ether per concentration of 0.53 molar.

Glycerol (10.021 mole; 0.45 mole/mole $Et_2Zn$) was added slowly over 1 hour, stirring and maintaining a temperature of 0°C. This was followed by addition of 1,3-propanediol (10.0044 mole; 0.1 mole/mole $Et_2Zn$; total 0.55 mole/mole polyol/$Et_2Zn$) over 15 minutes with stirring at 0°C.

The catalyst was a fine white precipitate in a clear supernatant, and was stirred overight at room temperature.

This catalyst was used in Description 14 (vi).

Description 14 (iii)

Preparation of Zinc Diethyl/Mixed Polyol Catalyst System

A 25(w/w)% solution of $Et_2Zn$ (Et = Ethyl) in heptane at 0°C, was diluted with dry tetrahydrofuran and a concentration of 0.51 molar.

Glycerol (0.021 mole; 0.47 mole/mole $Et_2Zn_1$ was added slowly over 1 hour with vigorous stirring. Gradually the mixture became gel-like and difficult to stir.

The temperature was maintained at 0°C, as propane-1,3-diol was added slowly (0.0044 mole; 0.1 mole/mole $Et_2Zn$; total 0.57 mole/mole polyol/$Et_2Zn$). This addition resulted in a thickening of the gel, which was left to stand overnight.

This catalyst was used in Description 14 (vii)

Description 14 (iv)

Preparation and Use of an Ethylene Oxide (EO)/Methyl Digol Glycidyl Ether (MDGE)/Allyl Glycidyl Ether (AGE) Matrix Precursor (Uncrosslinked Terpolymer) (Bleeding In EO)

Methyl digol glycidyl ether is of the formula/ $CH_2$-CH-$CH_2$-0-$CH_2$-$CH_2$-0-$CH_2$-$CH_2$-0-$CH_3$

The following materials were charged to a stirred, nitrogen purged, stainless steel 2 l autoclave: MDGE 50 ml, AGE 4ml, toluene 400 ml $Et_2Zn$ glycerol catalyst (30 ml; from Description 14 (ii)).

The reactor was heated to 60°C. Ethylene oxide was added (15ml, by $N_2$ pressure) with continuous stirring and reactor temperature was raised quickly to 100°C. 15 ml and 14 ml of ethylene oxide were added after 1 hr and 2 hrs respectively, to a total of 44ml).

Reaction was terminated after further 2 hrs at 100°C (making a total of 4 hr).

The polymer solution was cooled and degassed and 25 ml water in acetone (33% v/v) were added to deactivate the catalyst. The autoclave was hot washed with 500 ml toluene.

The washings were bulked with the polymer solution and thoroughly mixed. The polymer solution was filtered hot through a 10 micron polypropylene filter.

Toluene was removed from the polymer solution on a rotary evaporator and the polymer was heated at 80°C under vacuum (5 x $10^{-2}$ mbar) overnight to remove unreacted monomer, giving 73g (77%) of dry product.

The molecular weight of the polymer was measured by gel permeation chromatography using water as solvent

MW = 500,000

100 $MH_2$ NMR was used to measure the monomer incorporation into the final terpolymer, which was

68.2 mole % EO

29.9 mole % MDGE

29 mole % AGE

The resultant polymer was dissolved in methyl formate with shaking and passed through a 5μm polypropylene filter under a positive pressure of dry nitrogen.

The formate was removed via rotary evaporation and the polymer was again dried under heat (80°C) and vacuum (5x $10^{-2}$ mbar) for 4 hours to yield a colourless product.

A small portion of the material was heated under vacuum at 120°C for one week and yielded no noticeable degradation in colour.

This material was used in Example 14.

Description 14 (v)

Preparation and Use of an Ethylene Oxide (EO) Methyl Digol Glycidyl Ether (MDGE)/Allyl Glycidyl Ether (AGE) Matrix Precursor (Uncrosslinked Terpolymer)

The following materials were charged into a stirred, nitrogen purged, 2 l stainless steel autoclave: MDGE (40 ml), AGE (5ml) toluene (400 ml), $Et_2Zn$/glycerol catalyst (40 ml, from Description 14 (i)).

Ethylene oxide (44 ml, as a liquid) were then added whilst continuing to stir and the temperature was raised to 100°C. The reaction was allowed to proceed for 3 hr 40 min.

The polymer solution was cooled and degassed, and 25 ml of methanol were added to deactivate the catalyst.

The reaction mixture was worked up as described in Description 14 (ii)(b); yield 82.6g (97.3%) of product.

The molecular weight of the copolymer was measured by gel permeation chromatography using water as solvent.

MW = 750,000

100 MHz NMR was used to measure the monomer incorporation in the final terpolymr, which was

78.8 mole % EO

18.6 mole % MDG

2.6 mole % AGE

Description 14 (vi)

Preparation and Use of an Ethylene Oxide (EO)/Methyl Digol Glycidyl Ether (MDGE) / Allyl Glycidyl Ether (AGE) Matrix Precursor (Uncrosslinked Terpolymer)

The following materials were charged into a stirred, $N_2$ purged, 2 l stainless steel autoclave: MDGE (36 ml), AGE (3ml) toluene (400 ml), $Et_2Zn$/glycerol/ 1,3-propanediol catalyst (30 ml, from Description 14 (ii)).

The reactor was heated to 80°C EO was added (15 ml, by $N_2$ pressure) with continuous stirring and the temperature was raised to 100°C.

Two further aliquots of EO were added, 1 hour and 2 hours after the temperature of 100°C was attained. The reaction was terminated after a further 1½ hours, ie 3½ hours total reaction time, the polymer solution was cooled, and the catalyst was deactivated with methanol (25 ml).

The reaction mixture was worked up as described in Description 14 (iv), yielding 64.2g (78.8%) of product.

The molecular weight of the polymer was measured by gel permeation chromatography using water as solvent.

MW = 500,000

100 MHz NMR was used to determine the monomer incorporation into the final terpolymer, which was

89.4 mole % EO

9.1 mole % MDGE

1.5 mole % AGE

Description 14 (vii)

Preparation and Use of an Ethylene Oxide (EO)/Methyl Digol Glycidyl Ether (MDGE)/Allyl Glycidyl Ether (AGE) Matrix Precursor (Uncrosslinked Terpolymer

The following materials were charged into a stirred $N_2$ purged, 2 l stainless steel autoclave: MDGE (36 ml) AGE (3ml); toluene (350 ml); $Et_2Zn$/ glycerol/1,3-propanediol catalyst (1.25 ml) from Description 14 (iii)

The reactor was heated to 80°C, EO was added (15 ml, by $N_2$ pressure) with continuous stirring and the temperature was raised to 100°C.

Two further aliquots of EO were added, 1 hour and 2 hours after the temperature of 100°C was attained.

The reaction was terminated after a further 1½ hours, ie 3½ hours total reaction time, the polymer solution was cooled, and the catalyst was deactivated with methanol (25 ml).

The reaction mixture was worked up as described in Description 14 (iv) yielding 52.0 g (66 %) of product.

Molecular weight of polymer measured by gel perm chronoalogy using water as solvent.

MW = 480,000

100 MHz NMR

84.0 Mole % EO

14.5 Mole % MDGE
1.5 Mole % AGE

Example 14 (i)

Incorporation of Salt in Matrices/Matrix Precursors (Uncrosslinked Polymers); Measurement of Conductivity of Uncrosslinked Films.

This was carried out as in Example 1 (i) above, but using terpolymer from Description 14 (iv).

The ionic conductivity of the product over a range of temperatures was measured by standard AC impedance techniques as described in Example 9.

Conductivity 20°C = 2.2 x $10^5$ mho.cm$^{-1}$

Example 14 (ii) (a)

Incorporation of Salt in Matrix Precursors (Uncrosslinked Polymers/Polymer Solutions); Forming the Matrix by Thermally Cross-linking the Precursor

a) This was carried out as in Example 1 (ii) above, but using terpolymer from Description 14 (iv).

Conductivity 20°C determined as in Example 9 = 4.7 x $10^{-6}$ mho cm$^{-1}$.

Example 14 (ii) (b)

Incorporation of Salt in Matrix Precursors/ (Uncrosslinked Polymers/Polymer Solutions); Forming Matrix by Crosslinking the Precursor with Visible Light

1g of terpolymer from Description 14 (iv) was dissolved in 25 ml of dry acetonitrile with stirring and lithium triflate was added to give a 16:1 oxygen to lithium ratio.

0.5 wt % dry camphorquinone was added to the resulting solution, which was cast as as above into a 100µm film under a stream of dry nitrogen.

The film was crosslinked by irradiating for 5 minutes adjacent to a 1000W metal halide discharge lamp.

Conductivity 20°C = 4.6 x $10^{-6}$ mho cm$^{-1}$

Example 14 (iii)

Introducing Liquid into the Matrix

This was carried out as in Example 1 (iii) above, but using the films from Example 14 (ii) (a) and u$^{-1}$ (b) above. Solid Electrolytes (E14.1) to (E.14.8) (film from (a)) and (E14.9) to (E14.16) (film from (b)) are produced in this way.

Conductivity of (E14.1) 20°C
= 3.5 x$10^{-3}$ mho cm$^{-1}$
Liquid content wrt (liquid + polymer) = 83 wt%
wrt polymer = 490 parts by weight

Conductivity of (E14.9) 20°C
= 2.8 x$10^{-3}$ mho cm$^{-1}$
Liquid content wrt (liquid + polymer) = 76 wt%
wrt polymer = 330 parts by weight

Example 15

The procedures of Example 14 are carried out, but using the terpolymer of Description 14 (v).

Example 16

The procedures of Example 14 are carried out, but using the terpolymer of Description 14 (vi).

Example 17

The procedures of Example 14 are carried out, but using the terpolymer of Description 14 (vii).

Description 18 and Example 18

One-Pot Incorporation of Salt and Liquid in Matrix Precursor (Uncrosslinked Polymer); Forming the Matrix by Cross-linking the Precursor

1 g of terpolymer from Description 14 (iv) was used in the procedures of Description 2 and Example 2, but using propylene carbonate (0.5 g), to give Solid Electrolyte (E18.1). The film was elastic and easily handled.

Conductivity 20°C = $1.6 \times 10^{-4}$ mho.cm $^{-1}$

Conductivity -40°C = $2.3 \times 10^{-7}$ mho.cm $^{-1}$

The following polar aprotic liquids (0.5 g total liquid in each case) are also used in place of the above 0.5 g of propylene carbonate to give the Solid Electrolytes numbered in the brackets:

| | |
|---|---|
| 1:1 propylene carbonate/ethylene carbonate (EC) | (E18.2) |
| tetraethylene glycol dimethoxy ether (TEGDME) | (E18.3) |
| 3:7 propylene carbonate/DME | (E18.4) |

Example 19

The procedures of Example 18 are carried out, but using the terpolymer of Description 14 (v).

Example 20

The procedures of Example 18 are carried out, but using the terpolymer of Description 14 (vi).

Example 21

The procedures of Example 18 are carried out, but using the terpolymer of Description 14 (vii).

Description 22 and Example 22

One-Pot Incorporation of Salt and Liquid in Matrix Precursor (Uncrosslinked Polymer); Forming the Matrix by Cross-linking the Precursor

A mixture of the following dried components:
polymer from Description 14 (iv) (6 wt%),
acetonitrile (46 wt%),
propylene carbonate (45 wt%) and
lithium perchlorate (3 wt%)
was used generally in the procedures of Description 4 and Example 4, but to four aliquots of this solution (A, B, C and D) were added the following:

A benzoyl peroxide (2 wt% wrt polymer) in dry acetonitrile
poly(ethylene glycol) 200 dimethacrylate (5 wt% wrt polymer)

B benzoyl peroxide (2 wt% wrt polymer) in dry acetonitrile.
tetraethylene glycol acrylate (5 wt% wrt polymer)

C camphorquinone (2 wt% wrt polymer) in dry acetonitrile.
poly(ethylene glycol) 200 dimethacrylate (5 wt% wrt polymer)

D camphorquinone (2 wt% wrt polymer) in dry acetonitrile.

tetraethylene glycol acrylate (5 wt% wrt polymer)

2 ml aliquots of each of these three solutions were cast into a film into 35 mm i.d. glass rings on a polytetrafluoroethylene backing under a stream of nitrogen.

Each film was lightly cross-linked as in Example 14 (ii) (a) and (b) respectively (depending on whether the cross-linking agent is benzoyl peroxide or camphorquinone respectively to give Electrolytes (E22.1) to (E22.4) respectively.

Conductivity 20°C

(E22.1) = $3.2 \times 10^{-3}$ mho.cm $^{-1}$

(E22.2) = $4.1 \times 10^{-3}$ mho.cm $^{-1}$

(E22.3) = $3.0 \times 10^{-3}$ mho.cm $^{-1}$

(E22.4) = $3.5 \times 10^{-3}$ mho.cm $^{-1}$

The following polar aprotic liquids are also used in place of the above 0.5 g of propylene carbonate to give the Solid Electrolytes numbered in the brackets:

1:1 propylene carbonate/ethylene carbonate (EC) (E22.5) to (E22.8)

tetraethylene glycol dimethoxy ether (TEGDME) (E22.9) to (E22.12)

3:7 propylene carbonate/DME (E22.13) to (E22.16)

Example 23

The procedures of Example 22 are carried out, but using the terpolymer of Description 14 (v).

Example 24

The procedures of Example 22 are carried out, but using the terpolymer of Description 14 (vi).

Example 25

The procedures of Example 22 are carried out, but using the terpolymer of Description 14 (vii).

Example 26 (i)

Preparation of Electrochromically Active Substrates by Reactive Magnetron Sputtering

One edge of the a sheet of conductive glass glass coated with indium tin oxide (ITO glass, sheet resistance 20 ohm.square$^{-1}$) was masked over an area of ITO of about 10 x 50 mm.

A thin film of tungsten oxide (generally 0.1 to 0.5 micron thick) was sputtered onto the glass to give an electrochromically active area of about 2500 mm$^2$, and leaving an area of ITO under the masking with which electrical contact could be made.

Transition metal oxides of the types described hereinbefore as suitable as sources/sinks for lithium ions were similarly deposited as films (generally 0.1 to 0.5 micron thick) onto ITO glass. Such materials included vanadium pentoxide, and nickel and indium oxides.

The above process was also applied to a sheet of conductive polyethylene terephthalate (Melinex, ICI, 100 micron thick) coated with indium tin oxide (sheet resistance 30 ohm.square$^{-1}$), similarly masked to leave an area of ITO under the masking with which electrical contact could be made.

Transition metal oxides of the types described hereinbefore as suitable as electrochromic materials or sources/sinks for lithium ions were similarly deposited as films (generally to the same thicknesses).

Example 26 (ii)

Preparation of Source/Sink Substrates; Doping the Electrochromic Material with Lithium by Electrochemical Insertion

Adhesive copper tape (Chromerics) was applied to the ITO area of vanadium pentoxide coated glass prepared described in Example 26 (i).

The sheet of glass was made the cathode (opposite a platinum anode) in an electrolyte solution of lithium triflate (0.1 M) in acetonitrile.

Electrolysis under galvanostatic conditions at 10mA for 25 seconds changed the yellow-green vanadium pentoxide layer to a more transparent pale pink lithium vanadium bronze, x in $Li_xV_2O_5$ 0.3 (1:6.7, Li:V).

Example 26 (iii)

Preparation of Source/Sink Substrates; Doping the Electrochromic Material with Lithium by Electrochemical Insertion

This was carried out as in Example 26 (ii), using $W0_3$ in place of $V_20_5$ (opposite a platinum anode) in an electrolyte solution of lithium triflate (0.1 M) in acetonitrile.

Electrolysis was carried out under galvanostatic conditions at and 10 mA for 30 seconds.

x in $Li_x$ $W0_3$ of 0.16 (1:5.3, Li:W)

Example 26 (iv)

Device Fabrication by Lamination Process using a Jig Device

A jig device of the present invention is described below with reference to the accompanying (not to scale) Figure 5 which is a side elevation of the device.

The device 11 shown in Figure 5 comprises a hollow cylindrical vessel 12 and cooperating piston 13.

The vessel 12 is provided near the base 14 of its interior chamber 15 with a duct 16 communicating between the chamber 15 and the inside of a pipe 16, which is adapted to be attached to a vacuum or gas supply (not shown).

The base 14 has a central recess 17 dimensioned to house one rigid outer sheet 6A of the device to be fabricated ('the lower sheet'), such that the upper suface of the sheet 6A is slightly proud of the base 14.

The upper rim 18 of the vessel 12 is provided with four equally spaced unthreaded sockets 19.

The piston 13 is a snug sliding fit in the vessel 12, and in towards its lower face 20 is provided with two annular grooves 21, each housing an elastic annular O-ring 22, which is resiliently biased to provide a hermetic seal against the wall 23 of the vessel 12 when the piston 13 is in the vessel 12.

At its upper end 24, the piston 13 is provided with an annular flange 25, capable of abutting the vessel rim 18 and having four equally spaced threaded hole 26, each housing and meshing with a threaded set pin 27 with an unthreaded nose, such that each set pin 27 is capable of being housed in each threaded socket 19 in the vessel rim 18.

The piston lower face 20 is provided with a central recess 28 dimensioned to house a second rigid outer sheet 6B of the device to be fabricated ('the upper sheet'), such that the upper suface of the sheet 6B is slightly proud of the face 20.

The face 20 may also have one or more clamps or spring clips 29 (not shown) overlapping the perimeter of the recess 28, each of which is tightenable or resiliently biased towards the face 20 to means to retain or seal the upper sheet 6B in the recess 28.

Optional heating elements 30 (not shown) may be provided within the base 14 of the vessel 12 and/or the face 20 of the piston 13.

In operation the piston 13 is engaged with and slid fully into the chamber 15 until the set pins 27 bottom in the sockets 19.

The set pins 27 are then adjusted such that the opposing face 20 of the piston 13 and outer sheets 6A and 6B which face one another are kept apart at a desired distance.

One or both of the two eg glass plate outer sheets 6A and 6B for the desired electrochromic device is/are coated with the Solid Electrolyte by solvent casting or other means.

The sheets 6A and 6B are located in the recesses 17 and 28 respectively (the upper sheet being retained in the recess 28 by means of one or more optional clamps or spring clips 29 or temporary adhesive.

The piston 13 is engaged with and slid fully into the chamber 15.

The opposing surfaces of the outer sheets 6A and 6B which face one another are kept apart at a distance preset as above.

Vacuum is applied to the pipe 16 for a few minutes so that the entire device is evacuated to eg 1 mbar and is left to purge off gas to ensure that the polymer electrolyte is dry. At this stage heat may be applied by placing in an oven, or by means of the optional heating elements 30 in the vessel 12 and/or the piston 13.

The retaining screws are released so that the piston 13 is free to move under the vacuum beneath it, thus allowing the opposing faces of the coated sheets 6A and 6B to contact each other.

Further pressure may be applied using a ring press or other convenient means. The device may be heated further at this stage by the means descibed above, or use made of heat retained from the previous stage of heating.

The above procedure causes lamination and extrusion of excess Solid Electrolyte from the edges of the sheets 6A and 6B.

The thickness of the Solid Electrolyte layer is determined by the dimensions of the jig device, or if desired or necessary by inserting shims within the chamber 15.

The device 11 is brought back to atmospheric pressure and ambient temperature, and the fabricated device is removed.

Any Solid Electrolyte flash is removed, and the electrochromic device may be finished off as described generally hereinbefore.

An assembly comprising two glass sheets of Examples 26 (ii) and 26 (iii), one or both of which is/are coated with a layer of Solid Electrolyte is set up in the device shown generally in Figure 5 hereinafter and described above, and fabricated into an electrochromic device of the present invention.

This process variant may be used for the manufacture of automotive safety glass.

Example 26 (v)

Lamination Process Using a Discrete Film of Uncrosslinked Polymer; Crosslinking the Solid Electrolyte with Visible Light following Lamination

A small portion of the solution as described in any of Descriptions 14 (iv) to (vii) is poured onto a sheet of FEP release film in a dry atmosphere to yield a film of polymer 100μm thick, following solvent evaporation.

The supported polymer is trimmed to lie in register with one glass substrate. The polymer is applied to the substrate, and the release substrate is peeled away. The other piece of electrochromic glass is then applied and lamination is effected as described in Example 26 (iv).

The device is removed froom the jig, and the polymer in it is cured by irradiating the device for 5 minutes adjacent to 1000W metal halide discharge lamp. Excess polymer is trimmed from the edges, the device edge is sealed with a fast-cure expoxy resin.

Two pieces of copper tape are applied to the two exposed areas, and the electrochromic properties of the device are tested as described in Example a.3.(x).

Example 26 (vi)

Lamination Process using a Free-Standing Discrete Film of Uncrosslinked Polymer; Crosslinking the Solid Electrolyte with Visible Light following Lamination

A small portion of the solution described in Description 14 (v) is charged into a PTFE tray in a dry nitrogen atmosphere to yield a polymer film 150μm thick following solvent evaporation.

The polymer is peeled away from the PTFE backing placed on a piece of electrochromic glass and trimmed to size in a dry atmosphere.

Lamination with another piece of glass is effected using the general lamination process described in Example 26 (iv); hot press conditions 60°C, 8 bar, 30 minutes).

The polymer is cured, and the device is sealed and tested as described in Example 27.

Example 26 (vii)

Lamination Process Using Film of Uncrosslinked Solid Electrolyte Cast in Situ on One Glass Sheet; Crosslinking the Polymer Electrolyte with Visible Light following Lamination

A small quantity of the solution described in Description 14 (vi) is poured directly onto the electrochromic material of one of the glass sheet and a doctor blade is drawn across the surface 500μm above it, in a dry nitrogen atmosphere.

After solvent has evaporated, the resulting 50μn film is laminated to the second electrochromic glass substrate.

This is carried out using the general lamination process described in Example 26 (iv).

The polymer is cured as in Example 26 (v), and the device is sealed and tested as described in Example 27).

Example 26 (viii)

Lamination Process Using Films of Uncrosslinked Solid Electrolyte Cast in Situ on Both Glass Sheets; Crosslinking the Solid Electrolyte with Visible Light following Lamination

As Example 26 (vii) except 50μm films cast on both layers, yielding a polymer-polymer lamination interface.

Example 27

Testing of Devices

A d.c. potential of 1 to 3 V is applied between the electrochromically coated ITO electrode and the source/sink coated ITO electrode of the devices of Examples A.3.(i) to (ix), by means enabling its polarity to be automatically reversed at a plurality of set intervals over long periods.

Where the former electrode is at a negative potential with respect to the latter, rapid diffusion of lithium ions from the Solid Electrolyte into the tungsten oxide matrix results in a deep blue coloration.

Reversal of the polarity results in bleaching.

Example 28

Device Fabrication by Injection of Uncrosslinked Terpolymer into An Electrochromic "Mould" and Thermally Crosslinking in Situ

An alternative assembly of electrochromic thin-layer devices in accordance with the present invention is described below with reference to the accompanying (not to scale) Figure 3.

Figure 4 is a side elevation of a thin-layer device assembly of the present invention in the form of a variable transmission window which is eg suitable for vehicles.

The extended planar thin-layer device (DA3) depicted in Figure 4 consists of

a) a sheet of glass 5A bearing an ITO electrode layer 4A and a layer 2 of electrochromic material $WO_3$ and

b) a second sheet of glass 5B bearing and ITO electrode layer 4B and a a source/sink layer of lithium doped $V_2O_5$

(both prepared as in Descriptions 8 and 9) opposite each other, and separated by

c) a 500μm thick synthetic rubber gasket 7 and a layer of Solid Electrolyte 1 of a similar thickness.

Each of the sheets 5 and 6 is provided with a strip of copper tape in contact with, and acting as a current collector from, the respective electrode.

The device is contained by a peripheral epoxide sealant 8 around the two sheets 5 and 6.

The device is conveniently produced by a method comprising the in situ polymerisation of the Solid Electrolyte as described generally hereinbefore.

In such production, the device is made up without the layer 1 of Solid Electrolyte, and with the sheets 5 and 6 spaced apart by the peripheral synthetic rubber gasket seal 7 and held together with a number of peripheral spring clips.

The interior of the device is purged with nitrogen fed through one of two needles inserted through opposite portions of the gasket.

The device is held upright and a solution of the terpolymer of Description 14 (iv) made up as in Example

1 (i) is transferred to the "mould" by syringe through the gasket 7 from the bottom, and the device is purged with nitrogen to remove solvent.

The needles are withdrawn, and the device is placed in a nitrogen-flushed oven at room temperature.

The temperature is raised to 80°C over 1 hour and held at that temperature for 24 hours to cure the Solid Electrolyte precursor.

The device is removed from the oven, and the edge is sealed with the fast cure epoxy resin sealant 8, giving a satisfactory working electrochromic window (ED12).

This is tested as described in Example 27.

Analogues and derivatives of any of the foregoing devices may be produced varying the component materials of the device eg using any other suitably conductive materials within the scope of the present invention which are inert in any undesirable side reactions.

## Claims

1. A solid electrolyte for an electrical device, which comprises:
   a) a matrix of cross-linked polymer main chains, optionally having side-chains linked to the main chains, which side chains comprise polar groups free from active hydrogen atoms,
   b) a polar aprotic liquid dispersed in the matrix, and
   c) an ionised ammonium or alkali metal or alkaline earth metal salt dissolved in the matrix and/or liquid.

   characterised in that the liquid is present as at least 300 parts by weight per 100 parts by weight of the matrix.

2. A solid electrolyte according to claim 1 wherein the cross-linked polymer main chains (to which the side chains are linked) comprise hydrocarbon or polyether units, and the aprotic polar liquid is one with a dielectric constant of at least 50 and/or a dipole moment of at least 3 Debye, which is an alkylene carbonate, a dialkylformamide or -sulphoxide, a cyclic ether, a cyclic sulphone, or a higher molecular weight congener of the foregoing.

3. A solid electrolyte according to claim 1 wherein the aprotic polar liquid is a cyclic carbonate.

4. A solid electrolyte according to claim 1, wherein the liquid is present in the matrix at 335 to 1500 parts by weight per 100 parts by weight of the matrix.

5. A process for preparing a solid electrolyte according to claim 1 comprising in any feasible order:
   a) incorporating the ionised salt in the matrix or a precursor thereof,
   b) forming the matrix, and
   c) introducing the aprotic liquid into the matrix or a precursor thereof.

6. A cathode for a device according to claim 1 which is an electrochemical cell, which comprises a solid dispersion of a potential oxidant and a highly conductive material in a matrix of a solid electrolyte according to claim 1.

7. A cathode according to claim 6 comprising 30 to 60% $MnO_2$ and 2 to 10% carbon black, acetylene black or a transition metal (w/w on total cathode) as particles of less than 40 micron grain size.

8. A process for preparing a cathode according to claim 6 comprising in any feasible order steps a) to c) of the process of claim 5 and
   d) conventionally dispersing the potential oxidant and conductive material in the matrix or a precursor thereof.

9. An electrochemical cell which comprises a conductive anode and cathode capable of mutual electrochemical reaction and separated by a solid electrolyte according to claim 1.

10. A cell according to claim 9 wherein the cathode is a cathode according to claim 7.

Fig.1

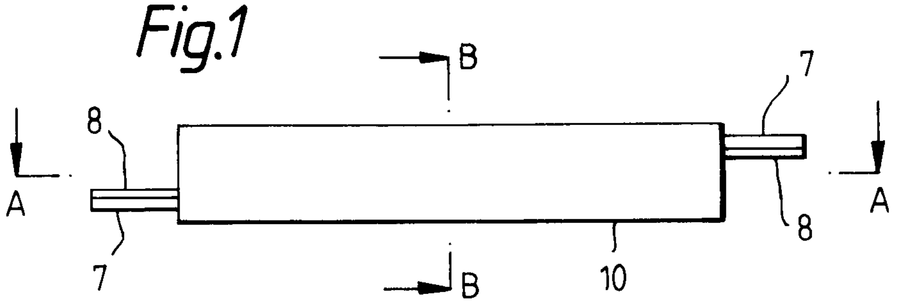


Fig.2

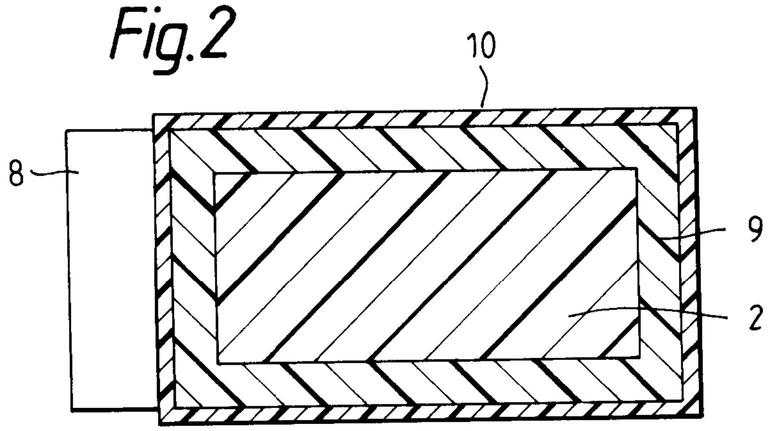


Fig.3

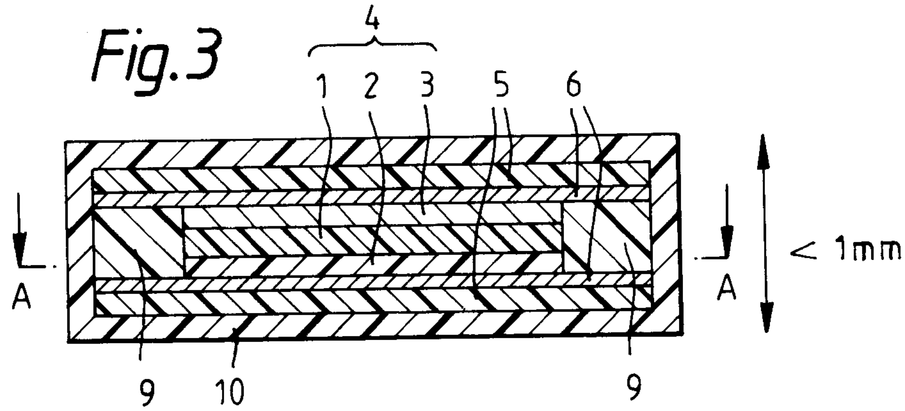

Fig. 4

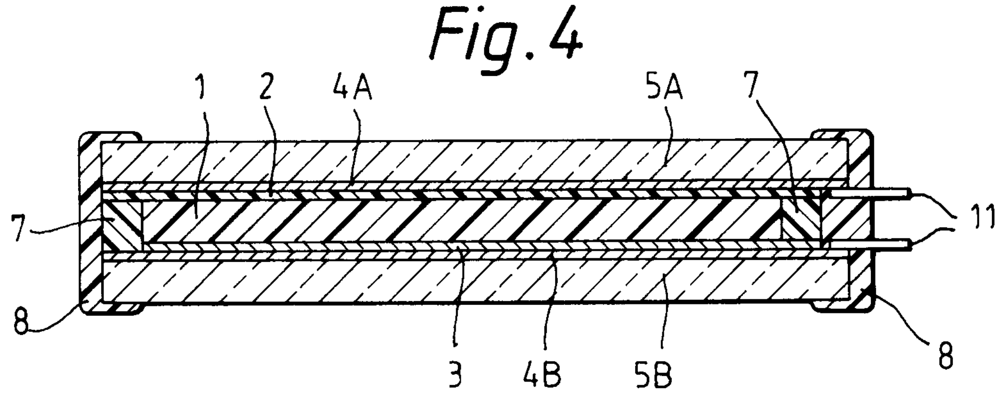
1
2
4A
5A
7
7
11
8
3
4B
5B
8

Fig. 5

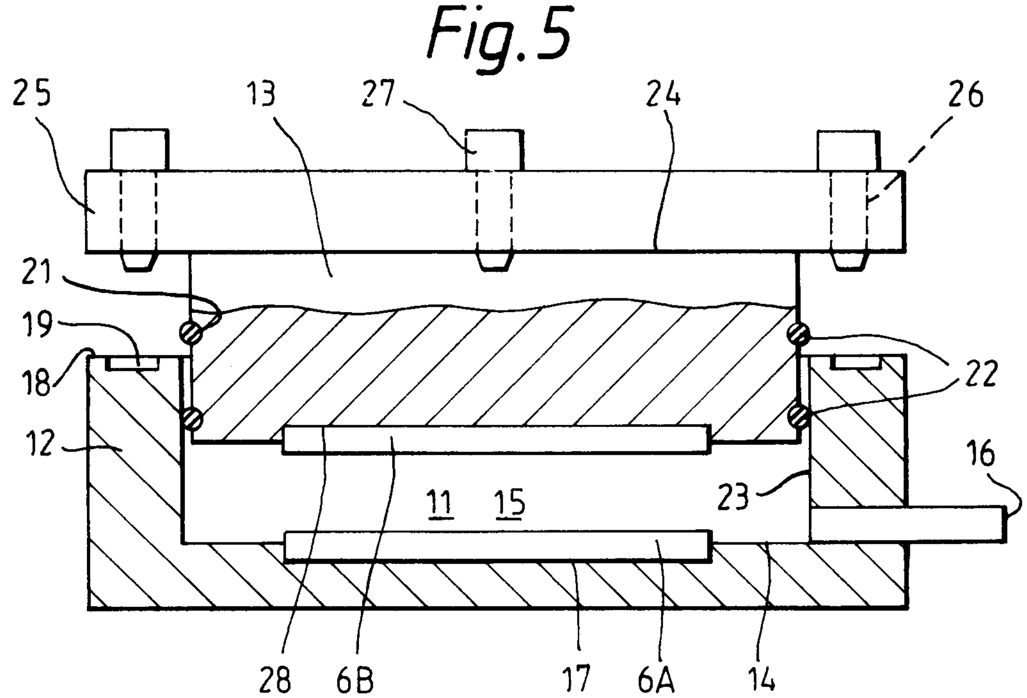
25
13
27
24
26
21
19
18
12
22
22
16
23
11
15
28
6B
17
6A
14